# EUROPEAN PATENT APPLICATION

(11) **EP 4 813 663 A1**
(43) Date of publication of application: **30.09.2026**
(21) Application number: 26167091.3
(22) Date of filing: 24.03.2026
(51) Int. Cl.: B41J 19/14, B41J 2/21, B41J 11/00, G06K 15/02

(54) **PRINT APPARATUS AND ADJUSTMENT METHOD THEREOF**

(30) Priority: 25.03.2025 JP 2025050162
(71) Applicant: Seiko Epson Corporation, Tokyo 160-8801 (JP)
(72) Inventor: MATSUMURA, Tetsuya, Suwa-shi, 392-8502 (JP)
(74) Representative: Lewis Silkin LLP

(57) **Abstract**

The print apparatus (1) includes a recording head (30), a control unit (U1), and a read unit (60). The control unit executes control of forming a first image (IM1), which is a part of a print image and includes a first mark portion (MA1) readable by the read unit, on a medium in a preceding pass, and executes control of forming a second image, which is a part of the print image and includes a second mark portion (MA2) readable by the read unit, on the medium to overlap the first image while keeping the first mark portion readable by the read unit in a following pass. The read unit reads the first mark portion and the second mark portion together when both the first mark portion and the second mark portion are readable. The control unit adjusts a landing position of a liquid onto the medium based on a relative positional relationship between the first mark portion and the second mark portion included in a reading result of the read unit.

## Description

The present application is based on, and claims priority from JP Application Serial Number 2025-050162, filed March 25, 2025, the disclosure of which is hereby incorporated by reference herein in its entirety.

### BACKGROUND

### 1. Technical Field

The present disclosure relates to a print apparatus that performs main scanning and sub scanning, and an adjustment method thereof.

### 2. Related Art

An inkjet printer that performs main scanning and sub scanning is known as a print apparatus. For example, in order to achieve highly accurate bidirectional printing, it is necessary to perform bidirectional adjustment (Bi-d adjustment) of aligning landing positions of ink liquid droplets in a forward path and a backward path. In order to achieve highly accurate sub scanning, paper feeding adjustment is necessary.

The inkjet printer disclosed in JP-A-2006-264194 forms a test pattern on a recording medium in order to prevent unevenness of a print image caused by variation in an amount of ink ejected from a recording head or deviation of a landing position. The inkjet printer reads a test pattern using a read sensor provided on a carriage and creates correction data, thereby executing recording without depending on nozzle features or the like of each recording head.

JP-A-2006-264194 is an example of the related art.

In order to form the test pattern, ink and a medium are separately required, and there is a time during which a user cannot print an image desired to be printed, that is, downtime. However, during printing, relative vibration may occur between a recording medium and the read sensor due to an operation of the carriage or the like. Therefore, when a print image is read by the read sensor during printing, reading accuracy of the print image may decrease.

### SUMMARY

According to the present disclosure, there is provided a print apparatus that forms a print image corresponding to an input image on a medium, the print apparatus including:
a recording head including a nozzle row configured to eject a liquid onto the medium;
a control unit configured to control main scanning in which a relative positional relationship between the recording head and the medium is changed along a main scanning direction and sub scanning in which a relative positional relationship between the medium and the recording head is changed along a sub scanning direction intersecting the main scanning direction, control ejection of the liquid from the recording head, and complete recording of the print image by the main scanning of a plurality of passes; and
a read unit configured to read a state of the liquid landed on the medium, in which
the plurality of passes includes a preceding pass, and a following pass after the preceding pass,
the control unit is configured to
   execute control of forming a first image, which is a part of the print image and includes a first mark portion readable by the read unit, on the medium in the preceding pass, and
   execute control of forming a second image, which is a part of the print image and includes a second mark portion readable by the read unit, on the medium to overlap the first image formed on the medium while keeping the first mark portion readable by the read unit in the following pass,
the read unit reads the first mark portion and the second mark portion together when both the first mark portion and the second mark portion are readable, and
the control unit adjusts a landing position of the liquid on the medium based on a relative positional relationship between the first mark portion and the second mark portion included in a reading result of the read unit.

According to the present disclosure, there is provided an adjustment method of a print apparatus that includes a recording head having a nozzle row configured to eject a liquid onto a medium and that forms a print image corresponding to an input image on the medium,
the print apparatus being configured to perform main scanning in which a relative positional relationship between the recording head and the medium is changed along a main scanning direction and sub scanning in which a relative positional relationship between the medium and the recording head is changed along a sub scanning direction intersecting the main scanning direction, eject the liquid from the recording head during the main scanning, and complete recording of the print image by the main scanning of a plurality of passes,
the plurality of passes including a preceding pass, and a following pass after the preceding pass,
the adjustment method including:
   a first image forming step of forming a first image, which is a part of the print image and includes a first mark portion readable by a read unit that reads a state of the liquid landed on the medium, on the medium in the preceding pass;
   a second image forming step of forming a second image, which is a part of the print image and includes a second mark portion readable by the read unit, on the medium to overlap the first image formed on the medium while keeping the first mark portion readable by the read unit in the following pass;
   a reading step of reading the first mark portion and the second mark portion together by the read unit when both the first mark portion and the second mark portion are readable; and
   an adjustment step of adjusting a landing position of the liquid on the medium based on a relative positional relationship between the first mark portion and the second mark portion included in a reading result of the read unit.

### BRIEF DESCRIPTION OF THE DRAWINGS

FIG. 1 is a diagram schematically illustrating an example of a print apparatus.
FIG. 2 is a diagram schematically illustrating an example of a recording head and a mark portion.
FIG. 3 is a diagram schematically illustrating an example of forming a print image by repeating main scanning and sub scanning.
FIG. 4 is a diagram schematically illustrating a dot arrangement example of an input image and a print image.
FIG. 5 is a diagram schematically illustrating a dot arrangement example of a first image, a second image, and a remaining image.
FIG. 6 is a diagram schematically illustrating a dot arrangement example of an input image and a print image.
FIG. 7 is a diagram schematically illustrating a dot arrangement example of the first image, the second image, and the remaining image.
FIG. 8 is a diagram schematically illustrating an example of a reading result including a first mark portion and a second mark portion.
FIG. 9 is a flowchart schematically illustrating an example of adjustment processing of the print apparatus.
FIG. 10 is a diagram schematically illustrating an example of processing based on a state of a mark portion.
FIG. 11 is a diagram schematically illustrating a first mark portion and a second mark portion in a second specific example.
FIG. 12 is a diagram schematically illustrating a recording head, a read unit, and a mark portion in a third specific example.
FIG. 13 is a flowchart schematically illustrating adjustment processing of a print apparatus in a fourth specific example.
FIG. 14 is a diagram schematically illustrating a comparative example of a reading result including a mark portion.

### DESCRIPTION OF EMBODIMENTS

An embodiment of the present disclosure will be described below. Of course, the following embodiment merely illustrates the present disclosure, and all of the features described in the embodiment are not necessarily essential to the solutions disclosed herein.

### (1) Overview of Aspects in Present Disclosure

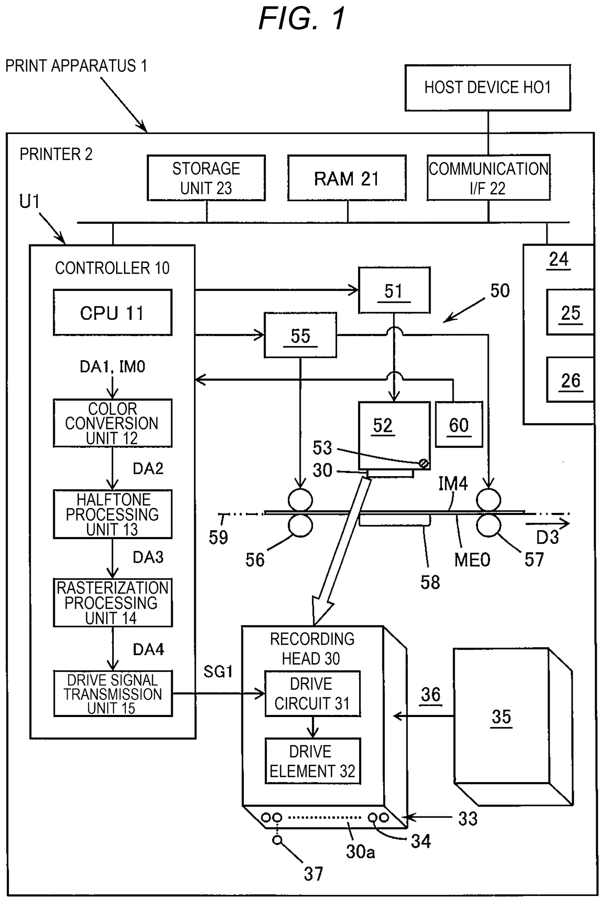

An overview of aspects included in the present disclosure will first be described with reference to examples illustrated in FIGS. 1 to 14. Note that the drawings of the present application are diagrams schematically illustrating examples, and in order to make each portion in these drawings have a recognizable size, a scale of each portion may be different from an actual scale, an enlargement factor may be different among directions illustrated in the drawings, and the drawings may not be consistent with one another. Of course, respective elements in these aspects are not limited to specific examples denoted by signs. In "Overview of aspects in present disclosure", a term in parentheses refers to supplementary description of a term immediately before the parentheses.

### Aspect 1

As illustrated in FIGS. 1 to 3 and the like, a print apparatus 1 according to an aspect is a print apparatus 1 that forms a print image IM4 corresponding to an input image IM0 on a medium ME0, and includes a recording head 30, a control unit U1, and a read unit 60. The recording head 30 has a nozzle row 33 capable of ejecting a liquid 36 to the medium ME0. The control unit U1 controls main scanning SC1 in which a relative positional relationship between the recording head 30 and the medium ME0 is changed along a main scanning direction D1, controls sub scanning SC2 in which a relative positional relationship between the medium ME0 and the recording head 30 is changed along a sub scanning direction D2 intersecting the main scanning direction D1, controls ejection of the liquid 36 from the recording head 30, and completes recording of the print image IM4 by the main scanning SC1 of a plurality of passes. The read unit 60 reads a state of the liquid 36 landed on the medium ME0. The plurality of passes include a preceding pass (for example, a first pass PA1) and a following pass (for example, a second pass PA2) after the preceding pass (PA1). The control unit U1 executes control of forming a first image IM1, which is a part of the print image IM4 and includes a first mark portion MA1 readable by the read unit 60, on the medium ME0 in the preceding pass (PA1). The control unit U1 executes control of forming a second image IM2, which is a part of the print image IM4 and includes a second mark portion MA2 readable by the read unit 60, on the medium ME0 to overlap the first image IM1 formed on the medium ME0 while keeping the first mark portion MA1 readable by the read unit 60 in the following pass (PA2). The read unit 60 reads the first mark portion MA1 and the second mark portion MA2 together when both the first mark portion MA1 and the second mark portion MA2 are readable. The control unit U1 adjusts a landing position of the liquid 36 onto the medium ME0 based on a relative positional relationship between the first mark portion MA1 and the second mark portion MA2 included in a reading result RS0 of the read unit 60.

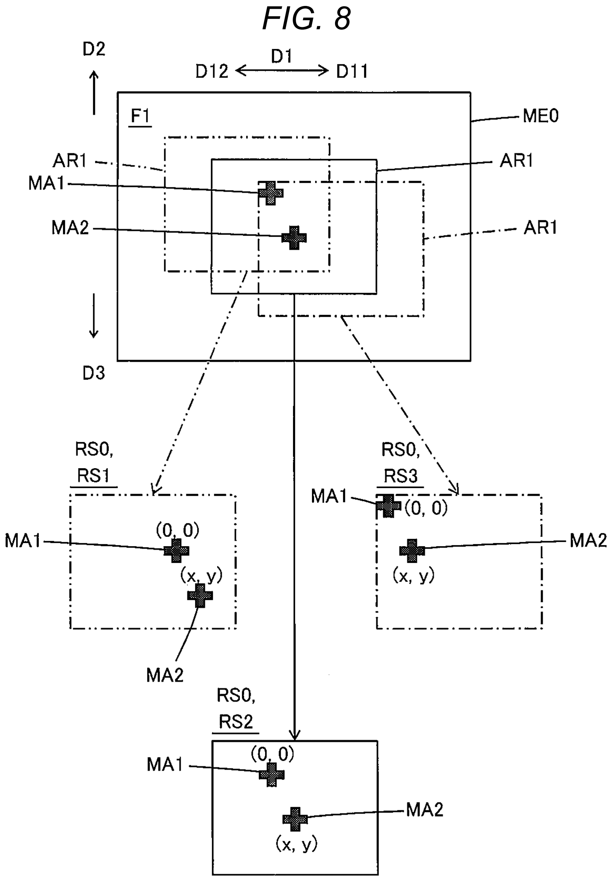

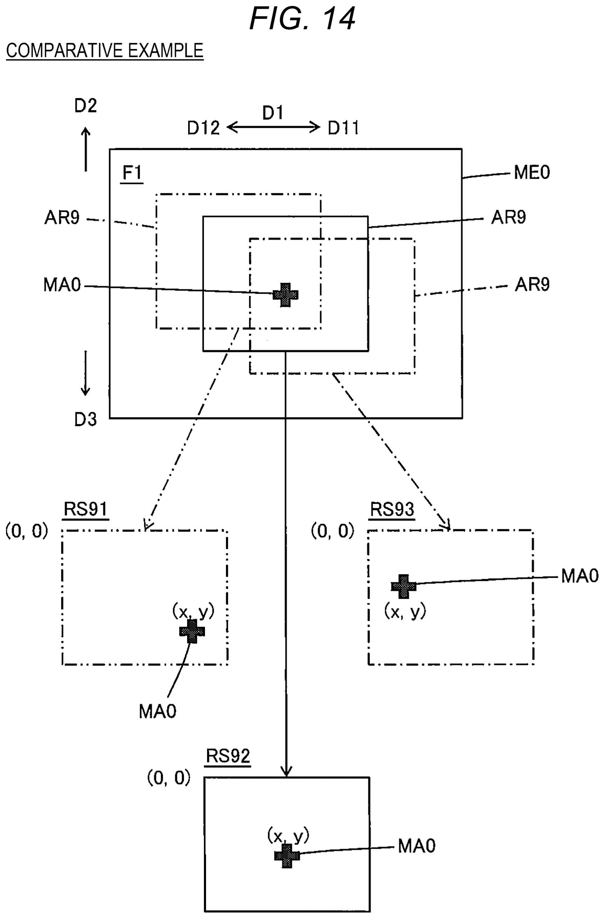

In the first mark portion MA1 formed on the medium ME0 in the preceding pass (PA1) and the second mark portion MA2 formed on the medium ME0 in the following pass (PA2), a landing error between passes (an error occurring in the landing positions of the liquid 36 in different passes) may occur. Here, vibration generated by a change in the relative positional relationship between the recording head 30 and the medium ME0 or the like is transmitted to the medium ME0. Since vibration of the read unit 60 and vibration of the medium ME0 are different from each other, relative vibration occurs between the medium ME0 and the read unit 60 as illustrated in FIG. 14. In the above aspect, since the first mark portion MA1 is formed on the medium ME0 in the preceding pass (PA1) and the second mark portion MA2 is formed on the medium ME0 while the first mark portion MA1 is kept readable in the following pass (PA2), as illustrated in FIG. 8, a relative positional relationship between the first mark portion MA1 and the second mark portion MA2 is not affected by the relative vibration between the medium ME0 and the read unit 60. Since the first mark portion MA1 and the second mark portion MA2 are read together by the read unit 60, it is possible to accurately adjust the landing position of the liquid 36 onto the medium ME0 based on the relative positional relationship between the first mark portion MA1 and the second mark portion MA2 included in the reading result RS0. Therefore, according to the above aspect, it is possible to provide a print apparatus capable of accurately adjusting a landing position of a liquid onto a medium even when relative vibration occurs between the medium and the read unit.

Various examples are listed in the aspect described above.

The medium includes various media such as paper, fabric, and film.

A change in the relative positional relationship described above refers to a movement of at least one of the recording head and the medium. Therefore, during the main scanning, the control unit may move the recording head along the main scanning direction without moving the medium, may move the medium along the main scanning direction without moving the recording head, or may move both the recording head and the medium along the main scanning direction. During the sub scanning, the control unit may move the medium along the sub scanning direction without moving the recording head, may move the recording head along the sub scanning direction without moving the medium, or may move both the recording head and the medium along the sub scanning direction.

Examples of the read unit include an imaging unit such as a camera, and a line sensor.

A recording method of the print image is not particularly limited as long as there is a portion of the print image in which recording is completed in a plurality of passes, and may be a method of performing the recording in both a forward path and a backward path in the main scanning, or a method of executing the recording only in one of the forward path and the backward path in the main scanning. The recording including the portion of the print image completed by the plurality of passes may be multi-pass recording in which the entire print image is formed by two or more passes, or may be recording including a portion of the print image completed by a single pass such as band printing in which recording regions partially overlap one another. In multi-pass recording of a print image, the number of passes may be partially changed. A relative movement amount of the recording head during the sub scanning in the sub scanning direction may be the same in each pass or may be changed in the plurality of passes.

When the recording of the print image is completed in two passes, the first pass corresponds to the preceding pass, and the second pass corresponds to the following pass. When the recording of the print image is completed in three or more passes, the preceding pass may be a pass before the final pass, and the following pass may be the second pass or a pass after the second pass.

The first mark portion may be formed of a visible liquid or may be formed of an invisible liquid. Therefore, the first mark portion may be included in the first image or may be arranged outside the first image.

"Forming the first image including the first mark portion in the preceding pass" refers to forming the first mark portion in the preceding pass when forming the first image in the preceding pass regardless of whether the first image includes the first mark portion. When the first image includes the first mark portion, the first image including the first mark portion is formed in the preceding pass. When the first image does not include the first mark portion, the first mark portion and the first image are formed in the preceding pass.

The second mark portion may be formed of a visible liquid or may be formed of an invisible liquid. Therefore, the second mark portion may be included in the second image or may be arranged outside the second image.

"Forming the second image including the second mark portion in the following pass" refers to forming the second mark portion in the following pass when forming the second image in the following pass regardless of whether the second image includes the second mark portion. When the second image includes the second mark portion, the second image including the second mark portion is formed in the following pass. When the second image does not include the second mark portion, the second mark portion and the second image are formed in the following pass.

In the present application, "first", "second", and the like are terms used to identify each component element contained in the plurality of component elements similar to one another, and do not indicate the order.

The adjustment of the landing position of the liquid onto the medium includes bidirectional adjustment (Bi-d adjustment) for aligning a landing position in a forward path and a landing position in a backward path, paper feeding adjustment (adjustment of a medium conveyance amount), and the like.

The additional remarks described above also apply to the following aspects.

### Aspect 2

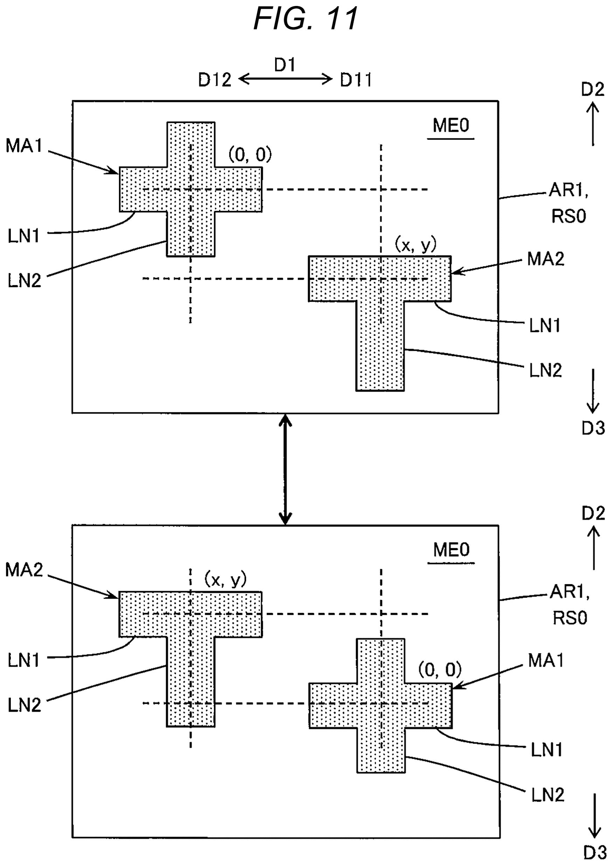

As illustrated in FIG. 11, the control unit U1 may execute control of forming the second image IM2, which includes the second mark portion MA2 having a shape different from that of the first mark portion MA1, on the medium ME0 in the following pass (PA2).

In the above case, since it is possible to easily distinguish the first mark portion MA1 and the second mark portion MA2 in the reading result RS0, it is possible to more accurately adjust the landing position of the liquid onto the medium.

Here, the fact that the first mark portion and the second mark portion have different shapes includes that a fact indicating that the first mark portion includes a plurality of dots and the second mark portion is one dot, and a fact indicating that the second mark portion includes a plurality of dots and the first mark portion is one dot. The additional remark described above also applies to the following aspects.

Although not included in the above Aspect 2, even when the first mark portion MA1 and the second mark portion MA2 have the same shape, the first mark portion MA1 and the second mark portion MA2 can be distinguished from each other in the reading result RS0 in a case where a range in which the first mark portion MA1 can be included and a range in which the second mark portion MA2 can be included in the reading result RS0 are different from each other.

### Aspect 3

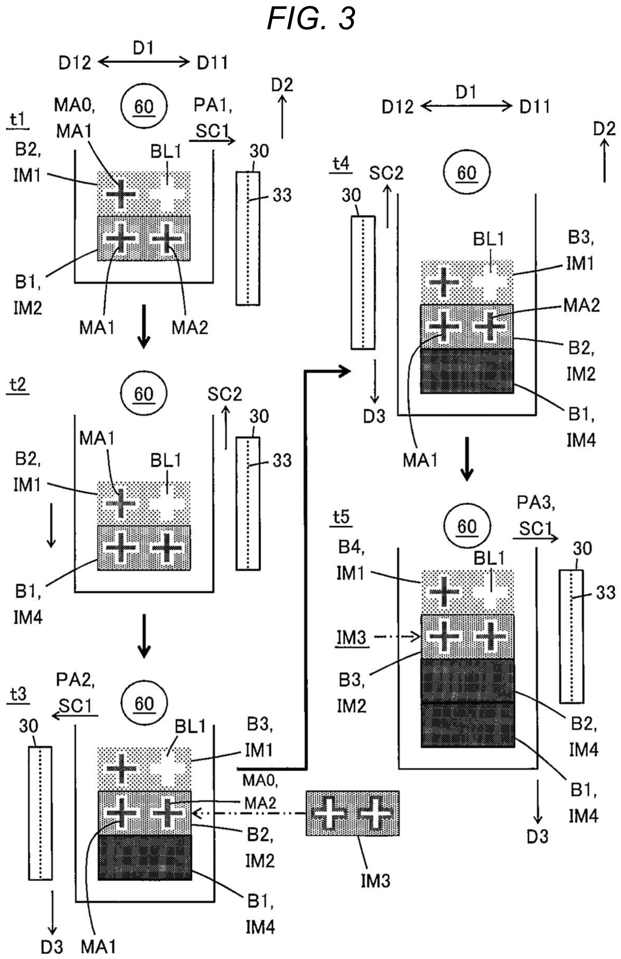

As illustrated in FIG. 3, the plurality of passes may be three or more passes. The following pass (PA2) may be a pass before the final pass (for example, a third pass PA3) among the plurality of passes. The control unit U1 may execute control of forming the first image IM1 including the first mark portion MA1 on the medium ME0 in the preceding pass (PA1). In the following pass (PA2), the control unit U1 may execute control of forming the second image IM2 including the second mark portion MA2 on the medium ME0 while keeping the first mark portion MA1 readable by the read unit 60. The control unit U1 may execute control of forming a remaining image IM3 of the print image IM4 excluding the first image IM1 and the second image IM2 on the medium ME0 in a pass (for example, the third pass PA3) excluding the preceding pass (PA1) and the following pass (PA2) among the plurality of passes.

In the above case, the first image IM1 including the first mark portion MA1 is formed on the medium ME0 in the preceding pass (PA1), the second image IM2 including the second mark portion MA2 is formed on the medium ME0 in the following pass (PA2), and the remaining image IM3 is formed on the medium ME0 in the remaining pass (PA3), thereby forming the print image IM4 on the medium ME0. The first mark portion MA1 and the second mark portion MA2 are embedded in the print image IM4, and a landing position is adjusted based on a relative positional relationship between the first mark portion MA1 and the second mark portion MA2 read by the read unit 60. Since it is not necessary to separately print a test pattern for adjusting the landing position, it is possible to reduce a liquid consumption amount, a medium consumption amount, and a printing time for printing the test pattern.

### Aspect 4

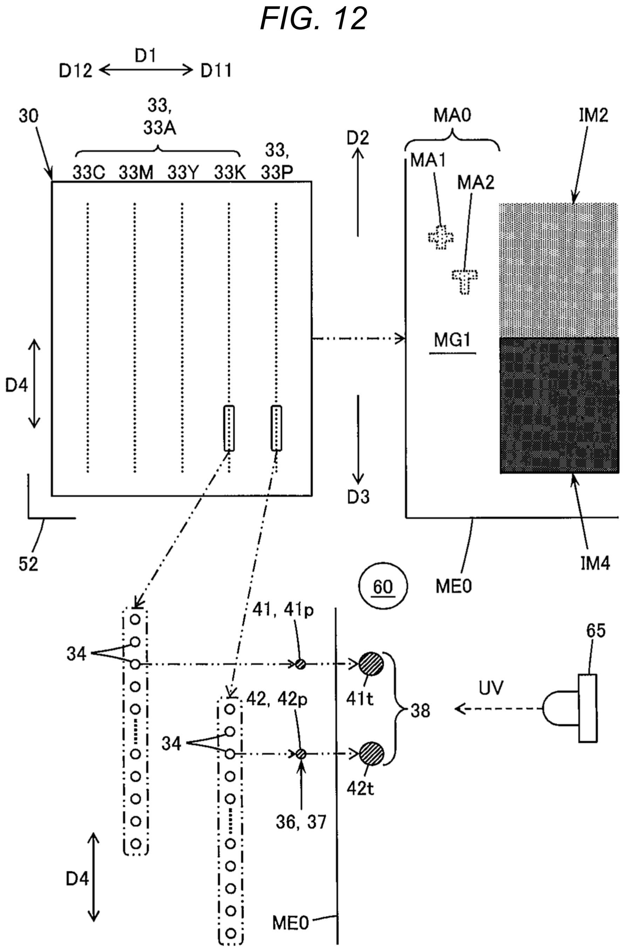

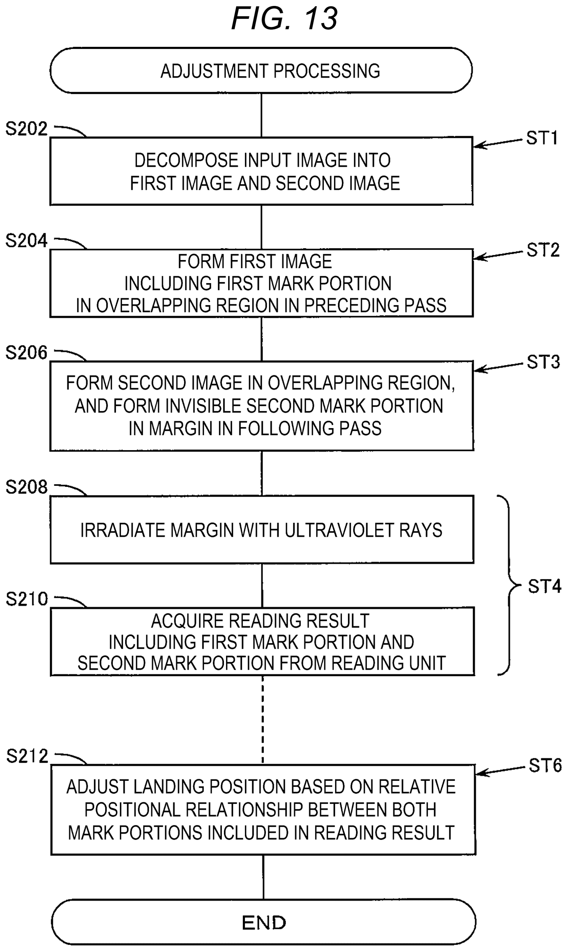

As illustrated in FIGS. 12 and 13, the recording head 30 may include, as the nozzle row 33, a first nozzle row 33A capable of ejecting a visible first liquid 41 serving as the liquid 36 to the medium ME0, and a second nozzle row 33P capable of ejecting an invisible second liquid 42 serving as the liquid 36 to the medium ME0. The read unit 60 may be configured to read states of the first liquid 41 and the second liquid 42 landed on the medium ME0. The control unit U1 may execute control of forming a mark portion MA0, which is at least one of the first mark portion MA1 and the second mark portion MA2, on the medium ME0 with the second liquid 42 ejected from the second nozzle row 33P.

In this case, since the mark portion MA0 is formed on the medium ME0 with the invisible liquid 36, the mark portion MA0 does not affect the print image IM4, and processing of dividing the recording of the print image into a plurality of passes can be easily executed.

### Aspect 5

As illustrated in FIGS. 12 and 13, the control unit U1 may execute control of forming the mark portion MA0 with the second liquid 42 in a margin MG1 of the medium ME0 where the print image IM4 is not formed.

In the above case, since the invisible mark portion MA0 does not overlap the print image IM4, it is easy to read the mark portion MA0. Therefore, in the above aspect, it is possible to more accurately adjust a landing position of the liquid onto the medium.

### Aspect 6

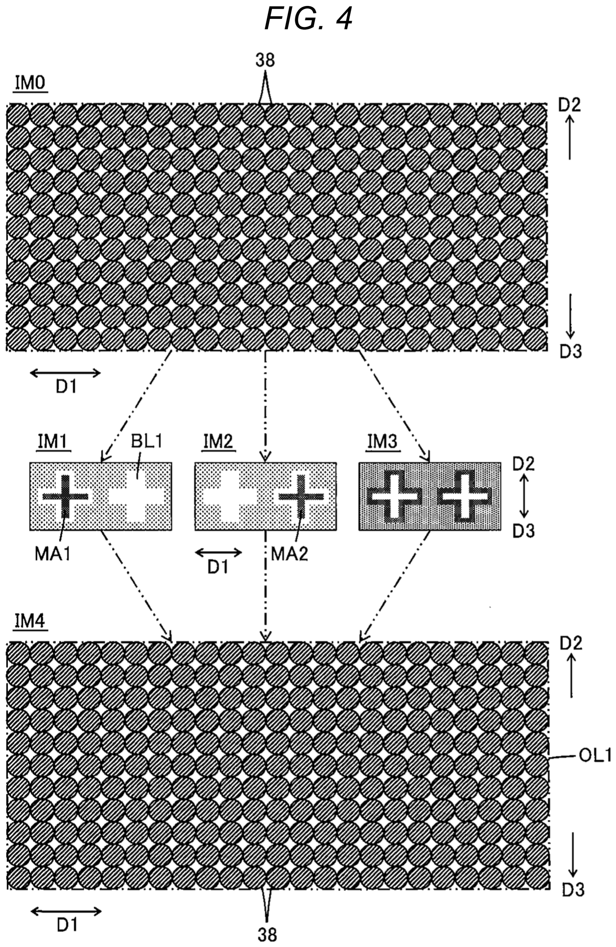

As illustrated in FIG. 4, the control unit U1 may perform at least one of control of forming the first image IM1 so as to include the first mark portion MA1 in a region of the medium ME0 where the first image IM1 is formed in the preceding pass (PA1) and control of forming the second image IM2 so as to include the second mark portion MA2 in a region of the medium ME0 where the second image IM2 is formed in the following pass (PA2).

In the above case, since the mark portion for adjusting a landing position can be formed as a part of forming the print image IM4, it is possible to save an amount of ink used when a pattern is formed only for adjustment. In addition, implementation can be performed without depending on a print mode such as a print mode of borderless printing in which there is no margin on the medium.

### Aspect 7

As illustrated in FIG. 3 and the like, in the plurality of passes, the following pass (PA2) may be a pass subsequent to the preceding pass (PA1).

When there is another pass between the preceding pass (PA1) and the following pass (PA2), a landing error between passes may occur a plurality of times, and it is difficult to dispose the first mark portion MA1 and the second mark portion MA2 close to each other due to a large change in the relative positional relationship between the recording head 30 and the medium ME0 in the sub scanning direction D2. Since the following pass (PA2) is a pass subsequent to the preceding pass (PA1), a landing position of the liquid on the medium can be adjusted more accurately.

### Aspect 8

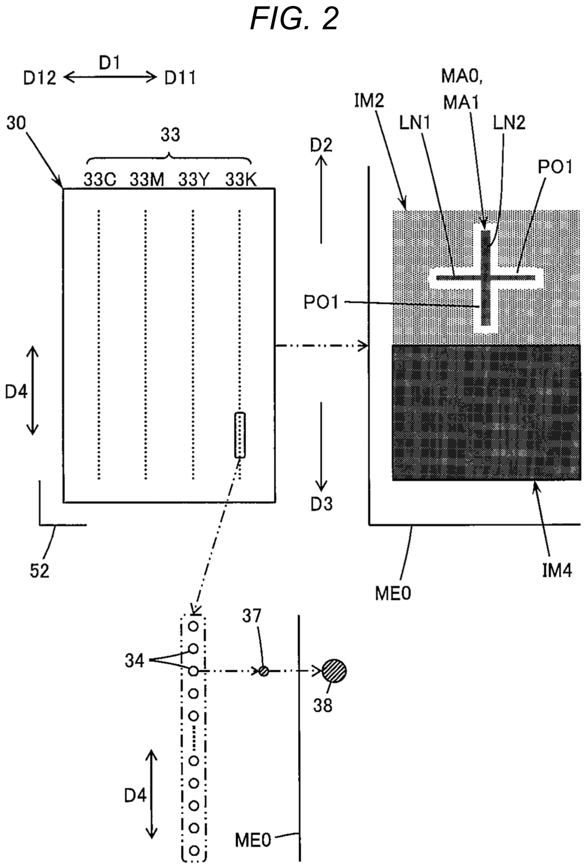

As illustrated in FIG. 2 and the like, the recording head 30 may have a plurality of the nozzle rows 33. The plurality of nozzle rows 33 may be arranged in the main scanning direction D1. In the preceding pass (PA1), the control unit U1 may execute control of forming the first mark portion MA1 on the medium ME0 with the liquid 36 ejected from one specific nozzle row (for example, a K nozzle row 33K) included in the plurality of nozzle rows 33. The control unit U1 may execute control of forming the second mark portion MA2 on the medium ME0 at a position different from the first mark portion MA1 with the liquid 36 ejected from the specific nozzle row (33K) in the following pass (PA2).

In the above case, since the same specific nozzle row (33K) is used for forming the first mark portion MA1 and forming the second mark portion MA2, there is no error between the nozzle rows in the relative positional relationship between the first mark portion MA1 and the second mark portion MA2. Here, when the same specific nozzle row (33K) is used for forming the first mark portion MA1 and forming the second mark portion MA2, the first mark portion MA1 and the second mark portion MA2 may have the same color. When the first mark portion MA1 and the second mark portion MA2 are formed at overlapping positions, it is assumed that the first mark portion MA1 and the second mark portion MA2 cannot be distinguished from each other from the reading result RS0. Since the first mark portion MA1 and the second mark portion MA2 are formed at different positions on the medium ME0, even when the first mark portion MA1 and the second mark portion MA2 have the same color, the first mark portion MA1 and the second mark portion MA2 can be easily read. Therefore, in the above aspect, it is possible to provide a suitable example of accurately adjust a landing position of the liquid onto the medium.

### Aspect 9

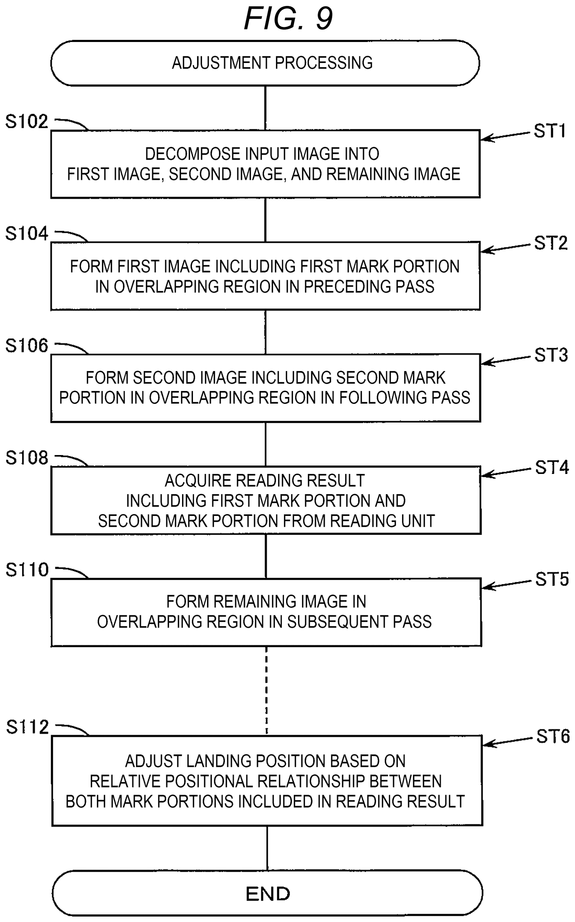

An adjustment method of the print apparatus 1 according to an aspect is an adjustment method of the print apparatus 1 that includes the recording head 30 having the nozzle row 33 capable of ejecting the liquid 36 to the medium ME0 and that forms the print image IM4 corresponding to the input image IM0 on the medium ME0. The print apparatus 1 performs the main scanning SC1 in which a relative positional relationship between the recording head 30 and the medium ME0 is changed along the main scanning direction D1, performs the sub scanning SC2 in which a relative positional relationship between the medium ME0 and the recording head 30 is changed along the sub scanning direction D2 intersecting the main scanning direction D1, ejects the liquid 36 from the recording head 30 during the main scanning SC1, and completes recording of the print image IM4 by the main scanning SC1 of a plurality of passes. The plurality of passes include a preceding pass (PA1) and a following pass (PA2) after the preceding pass (PA1). The present adjustment method includes the following steps as illustrated in FIGS. 9 and 13.

(a1) The adjustment method includes a first image forming step ST2 of forming the first image IM1, which is a part of the print image IM4 and includes the first mark portion MA1 readable by the read unit 60 that can read a state of the liquid 36 landed on the medium ME0, on the medium ME0 in the preceding pass (PA1). (a2) The adjustment method includes a second image forming step ST3 of forming the second image IM2, which is a part of the print image IM4 and includes the second mark portion MA2 readable by the read unit 60, on the medium ME0 to overlap the first image IM1 formed on the medium ME0, while keeping the first mark portion MA1 readable by the read unit 60 in the following pass (PA2).

(a3) The adjustment method includes a reading step ST4 of reading the first mark portion MA1 and the second mark portion MA2 together by the read unit 60 when both the first mark portion MA1 and the second mark portion MA2 are readable.

(a4) The adjustment method includes an adjustment step ST6 of adjusting a landing position of the liquid 36 on the medium ME0 based on a relative positional relationship between the first mark portion MA1 and the second mark portion MA2 included in the reading result RS0 of the read unit 60.

According to the above aspect, it is possible to provide an adjustment method of the print apparatus capable of accurately adjusting a landing position of a liquid onto a medium even when relative vibration occurs between the medium and the read unit.

Further, the aspects described above can be applied to a print system including the print apparatus described above, a control method of the print apparatus described above, a control method of the print system described above, a control program of the print apparatus described above, a control program of the print system described above, a non-transitory computer-readable recording medium recording any one of the control programs described above, and the like. The print apparatus described above may include a plurality of distributed parts.

### (2) First Specific Example of Print Apparatus for Forming Mark Portion During Recording of Print Image for Non-Adjustment Purpose

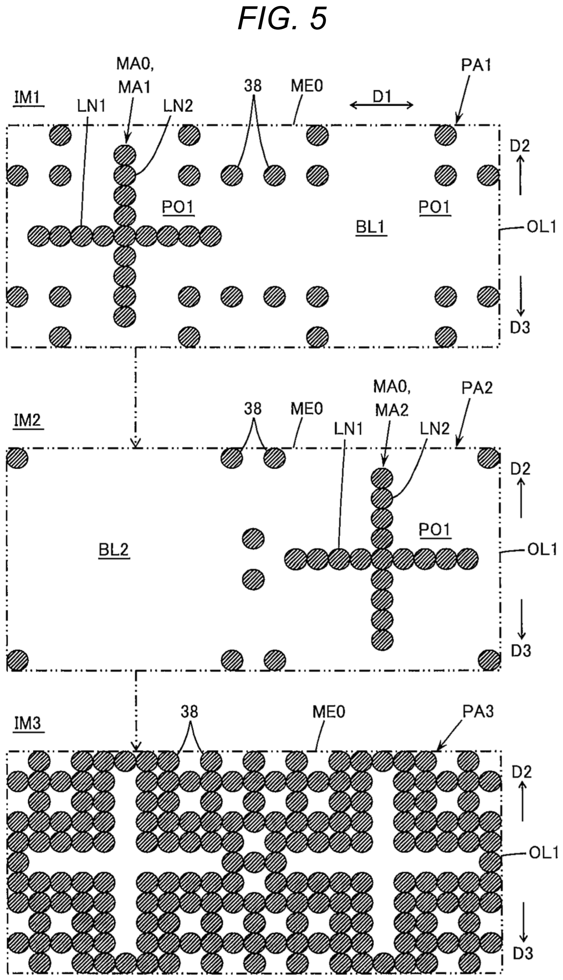

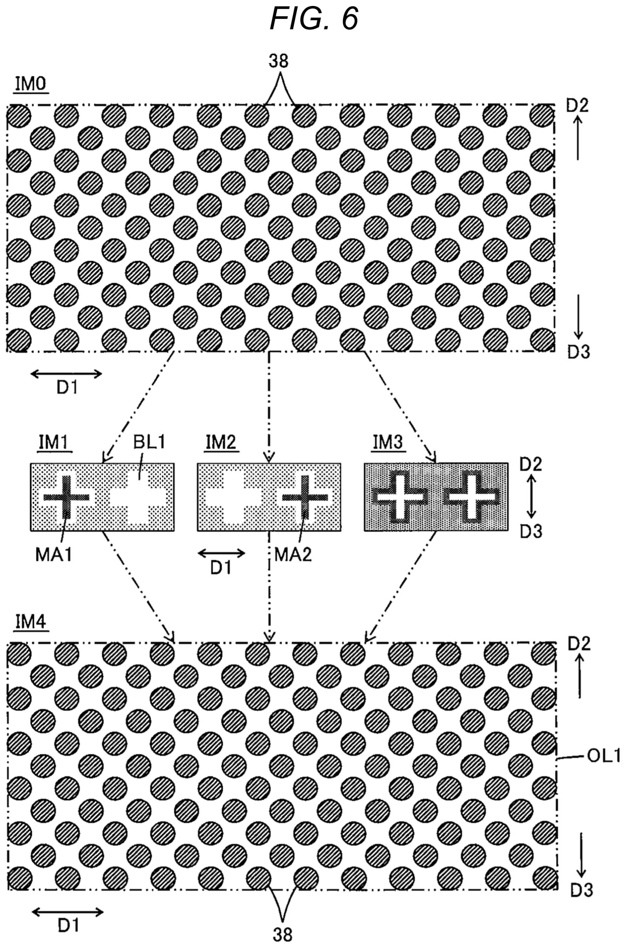

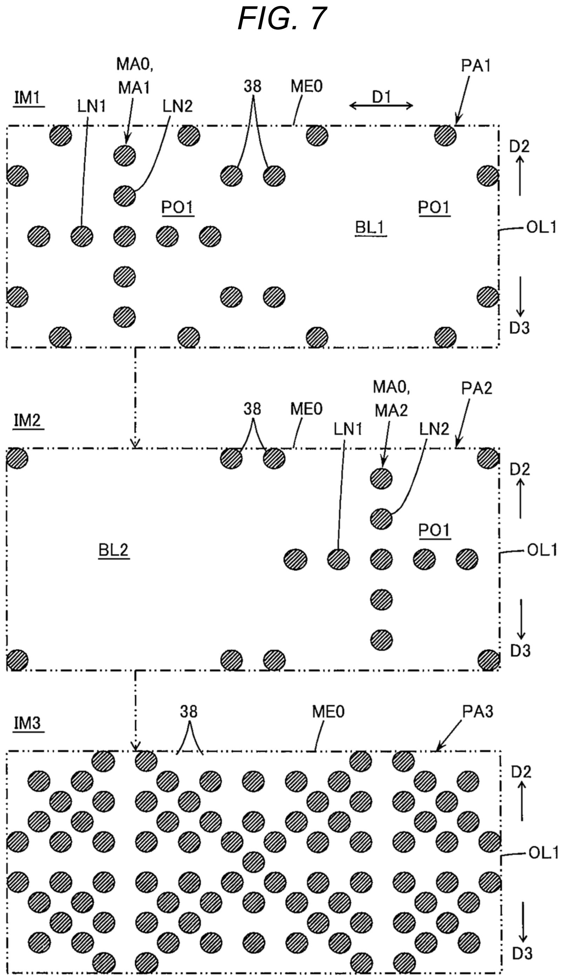

FIG. 1 schematically illustrates the print apparatus 1. Although the print apparatus 1 in the present specific example is the printer 2, the print apparatus 1 may be a combination of the printer 2 and a host device HO1. The printer 2 may include additional elements not illustrated in FIG. 1. FIG. 2 schematically illustrates the nozzle row 33 of the recording head 30 and the mark portion MA0 on the medium ME0. FIG. 3 schematically illustrates a state where the main scanning SC1 and the sub scanning SC2 are repeated to form the print image IM4. The printer 2 in the specific example is a serial printer that repeats the main scanning SC1 and the sub scanning SC2 so that an overlapping region is generated between passes. For example, since the recording of the print image IM4 is completed by three consecutive passes (PA1 to PA3), a band B2 is an overlapping region between the passes (PA1 and PA2) and is also an overlapping region between the passes (PA2 and PA3). FIG. 4 schematically illustrates dot arrangements of the input image IM0 and the print image IM4 when dots 38 are arranged in all pixels of the overlapping region OL1 between passes. FIG. 5 schematically illustrates dot arrangements of the first image IM1, the second image IM2, and the remaining image IM3 illustrated in FIG. 4. FIG. 6 schematically illustrates dot arrangements of the input image IM0 and the print image IM4 when the dots 38 are arranged in 50% pixels among all the pixels of the overlapping region OL1 between passes. FIG. 7 schematically illustrates dot arrangements of the first image IM1, the second image IM2, and the remaining image IM3 illustrated in FIG. 6.

The printer 2 illustrated in FIG. 1 is an inkjet printer that ejects, as liquid droplets 37, the liquid 36 for forming the print image IM4 corresponding to the input image IM0. The printer 2 includes a controller 10, a random access memory (RAM) 21 that is a semiconductor memory, a communication interface (I/F) 22, a storage unit 23, an operation panel 24, the recording head 30, a drive unit 50, the read unit 60, and the like. The controller 10 and the drive unit 50 are an example of the control unit U1. The controller 10, the RAM 21, the communication I/F 22, the storage unit 23, and the operation panel 24 are coupled to a bus and can input and output information to and from each other.

The controller 10 includes a central processing unit (CPU) 11, which is a processor, a color conversion unit 12, a halftone processing unit 13, a rasterization processing unit 14, a drive signal transmission unit 15, and the like. The controller 10 controls the main scanning SC1 and the sub scanning SC2 by the drive unit 50 and controls the ejection of the liquid droplets 37 by the recording head 30 based on original image data DA1 acquired from any one of the host device HO1, a memory card (not illustrated), and the like. It can be said that the controller 10 controls the drive unit 50 and the recording head 30 such that the print image IM4 corresponding to the original image data DA1 serving as the input image IM0 is formed on the medium ME0. For example, RGB data having, for example, integer values at 2⁸ tones or 2¹⁶ tones of red (R), green (G), and blue (B) for each pixel can be applied to the original image data DA1.

The controller 10 can be implemented by a system on a chip (SoC) or the like.

The CPU 11 is a device that mainly executes information processing and control in the printer 2.

The color conversion unit 12 refers to, for example, a color conversion lookup table (LUT) that defines a correspondence relationship between tone values of R, G, and B and tone values of C, M, Y, and K, and converts RGB data into ink amount data DA2 having integer values of 2⁸ tones or 2¹⁶ tones of C, M, Y, and K for each pixel. The ink amount data DA2 represents use amounts of the liquids 36 of C, M, Y, and K in units of pixels. When resolution of the RGB data is different from print resolution, the color conversion unit 12 first converts the resolution of the RGB data into the print resolution or converts the resolution of the ink amount data DA2 into the print resolution.

The halftone processing unit 13 executes halftone processing on tone values of pixels for forming the ink amount data DA2 by any one of a dither method, an error diffusion method, and the like, thereby reducing the number of tones of the tone value, and generates dot data DA3. The dot data DA3 represents a formation state of the dots 38 of the liquid droplets 37 in units of pixels. The dot data DA3 may be binary data representing the presence or absence of dot formation, or may be multi-level data in three or more tones that can cope with dots different in sizes such as small, medium, and large dots.

The rasterization processing unit 14 executes rasterization processing of rearranging the dot data DA3 in order in which the dots 38 are formed by the drive unit 50, thereby generating raster data DA4.

The drive signal transmission unit 15 generates a drive signal SG1 based on the raster data DA4 and outputs the drive signal SG1 to a drive circuit 31 of the recording head 30. The drive signal SG1 corresponds to a voltage signal applied to a drive element 32 of the recording head 30. For example, when the dot data DA3 represents "dot formation", the drive signal transmission unit 15 outputs the drive signal SG1 for ejecting liquid droplets for dot formation. Further, in a case where the dot data DA3 is data having three or more values, the drive signal transmission unit 15 outputs the drive signal SG1 for ejecting liquid droplets for large dots when the dot data DA3 represents "large dot formation", and outputs the drive signal SG1 for ejecting liquid droplets for small dots when the dot data DA3 represents "small dot formation". The print image IM4 is formed on the medium ME0 according to the drive signal SG1. Therefore, the ink amount data DA2, the dot data DA3, or the raster data DA4 may be applied to the input image IM0.

The above-described elements (11 to 15) may be implemented by an application specific integrated circuit (ASIC), and may directly read processing target data from the RAM 21 or directly write processed data to the RAM 21.

The drive unit 50 controlled by the controller 10 includes a carriage drive unit 51 including a servo motor and a roller drive unit 55 including a servo motor. According to the control of the controller 10, the drive unit 50 drives the carriage drive unit 51 to cause a carriage 52 to reciprocate along the main scanning direction D1, and drives the roller drive unit 55 to send the medium ME0 in a feeding direction D3 along a conveyance path 59. As illustrated in FIG. 2, the main scanning direction D1 is a direction intersecting an arrangement direction D4 of nozzles 34 in the nozzle row 33, and is, for example, a direction orthogonal to the arrangement direction D4. In FIG. 2, a right direction is a forward direction D11 of the main scanning SC1, and a left direction is a backward direction D12 of the main scanning SC1. The feeding direction D3 is a direction intersecting the main scanning direction D1, and is, for example, a direction orthogonal to the main scanning direction D1. In FIG. 1, the feeding direction D3 is the right direction. The sub scanning direction D2 illustrated in FIG. 2 is a direction opposite to the feeding direction D3. It can be said that the carriage drive unit 51 performs the main scanning SC1 in which a relative positional relationship between the recording head 30 and the medium ME0 is changed along the main scanning direction D1. The roller drive unit 55 includes a conveyance roller pair 56 and an ejection roller pair 57. According to the control of the controller 10, the roller drive unit 55 performs the sub scanning SC2 in which the medium ME0 is fed in the feeding direction D3 by rotating a drive conveyance roller of the conveyance roller pair 56 and a drive ejection roller of the ejection roller pair 57. It can be said that the roller drive unit 55 performs the sub scanning SC2 in which a relative positional relationship between the medium ME0 and the recording head 30 is changed along the sub scanning direction D2 intersecting the main scanning direction D1. Although the carriage 52 illustrated in FIG. 2 does not move in the sub scanning direction D2, the drive unit 50 may achieve the sub scanning SC2 by moving the carriage 52 in the sub scanning direction D2. At this time, the medium ME0 may not move in the sub scanning direction D2, and the drive unit 50 may achieve the sub scanning SC2 by moving both the carriage 52 and the medium ME0 in the sub scanning direction D2. As illustrated in FIG. 3, the control unit U1 completes the recording of the print image IM4 by the main scanning SC1 of a plurality of passes.

The medium ME0 is a print target object that holds a print image. A material of the medium ME0 is not particularly limited, and various materials such as paper, resin, and metal are conceivable. A shape of the medium ME0 is not particularly limited, and various shapes such as a rectangular shape and a roll shape are conceivable, and the medium ME0 may have a three-dimensional shape.

A platen 58 is located below the conveyance path 59 and supports the medium ME0 when the platen 58 comes into contact with the print medium ME0 located in the conveyance path 59. The recording head 30 is mounted on the carriage 52. A liquid cartridge 35 that supplies the liquid 36 ejected as the liquid droplets 37 to the recording head 30 may be mounted on the carriage 52. Of course, the liquid 36 may be supplied to the recording head 30 via a tube from the liquid cartridge 35 installed outside the carriage 52. The liquid 36 may be supplied to the recording head 30 via a tube from an ink tank (not illustrated). The carriage 52 is fixed to an endless belt (not illustrated) and is movable in the main scanning direction D1 along a long guide 53 whose longitudinal direction is oriented in the main scanning direction D1. The recording head 30 controlled by the controller 10 includes the drive circuit 31, the drive element 32, and the like, and causes the liquid 36 to adhere to the medium ME0 by ejecting the liquid droplets 37 toward the medium ME0 supported by the platen 58. Therefore, it can be said that the control unit U1 controls the ejection of the liquid droplets 37 from the recording head 30.

The drive circuit 31 applies a voltage signal to the drive element 32 according to the drive signal SG1 input from the drive signal transmission unit 15. The drive element 32 may be a piezoelectric element that applies pressure to the liquid 36 in a pressure chamber communicating with the nozzle 34, or may be a drive element or the like that generates air bubbles in the pressure chamber by heat and ejects the liquid droplets 37 from the nozzle 34. The liquid 36 is supplied from the liquid cartridge 35 to the pressure chamber of the recording head 30. The liquid 36 in the pressure chamber is ejected as the liquid droplets 37 from the nozzle 34 toward the medium ME0 by the drive element 32. Accordingly, the dots 38 of the liquid droplets 37 are formed on the medium ME0, and the print image IM4 expressed by a pattern of the dots 38 is formed on the medium ME0. The dots 38 based on the raster data DA4 are formed while the recording head 30 moves in the main scanning direction D1, and the medium ME0 is repeatedly fed by one sub scanning in the feeding direction D3, so that the print image IM4 is formed on the medium ME0. The printer 2 may perform bidirectional printing in which the print image IM4 is formed by both the main scanning in the forward direction D11 and the main scanning in the backward direction D12, or may perform unidirectional printing in which the print image IM4 is formed by only one of the main scanning in the forward direction D11 and the main scanning in the backward direction D12.

The RAM 21 stores the original image data DA1 and the like received from the host device HO1, a memory (not illustrated), and the like. The communication I/F 22 is coupled to the host device HO1 in a wired or wirelessly manner, and inputs information to and outputs information from the host device HO1. The host device HO1 includes a computer such as a personal computer or a tablet terminal, a mobile phone such as a smartphone, a digital camera, a digital video camera, and the like. The storage unit 23 may be a nonvolatile semiconductor memory such as a flash memory, or may be a magnetic storage device such as a hard disk. The operation panel 24 includes an output unit 25 such as a liquid crystal panel that displays information, an input unit 26 such as a touch panel that receives an operation on a display screen, and the like.

The read unit 60 reads a state of the liquid 36 landed on the medium ME0. As illustrated in FIG. 3, the read unit 60 in the present specific example reads a state of the mark portion MA0 included in the second image IM2 overlapping the first image IM1. The mark portion MA0 collectively refers to the first mark portion MA1 formed when the first image IM1 is formed and the second mark portion MA2 formed when the second image IM2 is formed. The read unit 60 illustrated in FIGS. 1 and 3 is provided in the printer 2 so as not to move in the main scanning direction D1 separately from the carriage 52, and detects a density of a portion where the mark portion MA0 is formed on the medium ME0 in units of detection elements such as imaging elements. The read unit 60 may be mounted at the carriage 52.

The read unit 60 may be a solid-state imaging element such as a line sensor or an area sensor implemented by a charge coupled device (CCD) such as a so-called digital camera, a complementary metal-oxide semiconductor (CMOS) image sensor, a contact image sensor (CIS) type or CCD type image sensor, or the like. An external digital camera or the like serving as the read unit 60 may be coupled to the printer 2. The read unit 60 in the specific example can detect a density of a pattern of the dots 38 formed on the medium ME0 in units of detection elements, and outputs a digital value representing the density in units of detection elements to the controller 10. The read unit 60 can read a state such as a position or a density of the mark portion MA0 in units of dots 38. Therefore, even when the dots 38 included in the mark portion MA0 are discretely arranged, the read unit 60 can read a state of the mark portion MA0. Therefore, even when the dots 38 included in the mark portion MA0 are discretely arranged, the read unit 60 can read a state of the mark portion MA0. When the read unit 60 is a camera, it can be said that the read unit 60 captures the second image IM2 overlapping the first image IM1 in a manner of including the mark portions (MA1 and MA2).

The recording head 30 illustrated in FIG. 2 includes, at a nozzle surface 30a, nozzle rows 33 in which a plurality of the nozzles 34 that can eject the liquid droplets 37 onto the medium ME0 are arranged at an interval that is a predetermined nozzle pitch, in the arrangement direction D4. Here, the nozzle refers to a small hole through which liquid droplets are ejected, and the nozzle row refers to an array of a plurality of nozzles. The nozzle surface 30a is an ejection surface of the liquid droplets 37. The nozzle row 33 includes, for example, a C nozzle row 33C that can eject the liquid 36 of C onto the medium ME0, an M nozzle row 33M that can eject the liquid 36 of M onto the medium ME0, a Y nozzle row 33Y that can eject the liquid 36 of Y onto the medium ME0, and a K nozzle row 33K that can eject the liquid 36 of Y onto the medium ME0. It can be said that the recording head 30 has a plurality of the nozzle rows 33, and the plurality of nozzle rows 33 are arranged in the main scanning direction D1. In each of the nozzle rows (33C, 33M, 33Y, 33K) illustrated in FIG. 2, the plurality of nozzles 34 are arranged in one row at intervals of a predetermined nozzle pitch in the arrangement direction D4. The plurality of nozzles 34 of each nozzle row (33C, 33M, 33Y, 33K) may be arranged in a staggered manner, that is, in two rows at intervals of a predetermined nozzle pitch in the arrangement direction D4. Here, the arrangement direction of the plurality of nozzles 34 arranged in a staggered manner is an arrangement direction of the nozzles focusing on each of the two rows.

As illustrated in FIG. 3, the printer 2 in the present specific example forms the print image IM4 on the medium ME0 in a plurality of passes (PA1 to PA3) in the overlapping region OL1. Here, the first pass PA1 is an example of a preceding pass, the second pass PA2 is an example of a following pass subsequent to the preceding pass, and the third pass PA3 is an example of a final pass. Of course, the following pass illustrated in FIG. 3 is a pass after the preceding pass and is a pass before the final pass. It can be said that the third pass PA3 is a pass excluding the preceding pass and the following pass among the plurality of passes. The printer 2 forms the first image IM1 including the first mark portion MA1 readable by the read unit 60 on the medium ME0 based on the input image IM0 in the first pass PA1. It can be said that the printer 2 forms the first image IM1, which is a part of the print image IM4 and includes the first mark portion MA1, on the medium ME0. The printer 2 forms the second image IM2, which includes the second mark portion MA2 readable by the read unit 60, on the medium ME0 based on the input image IM0 while keeping the first mark portion MA1 readable by the read unit 60 in the second pass PA2. It can be said that the printer 2 forms the second image IM2 which is combined as a part of the print image IM4 and includes the second mark portion MA2 on the medium ME0. The printer 2 forms, on the medium ME0, the remaining image IM3 of the print image IM4 excluding the first image IM1 and the second image IM2 in the third pass PA3. The formed print image IM4 is not a test pattern for adjustment such as Bi-d adjustment and paper feeding adjustment, but is an image to be printed to obtain a printed matter that a user wants to use for various purposes. The print image IM4 can also be referred to as a non-adjustment target image. For example, the print image IM4 includes a natural image or a photographic image to be decorated or sold in a room by a user, a document image indicated to another person such as a line drawing for presentation, and the like. The first image IM1 and the second image IM2 are formed from the input image IM0 exemplified above. A printed matter of the print image IM4 that a user wants to use for various purposes described above is obtained by including the first mark portion MA1 and the second mark portion MA2 in the second image IM2 overlapping the first image IM1 and filling a peripheral region of the mark portions (MA1 and MA2) with the remaining image IM3 after the second image IM2 is formed.

After the second image IM2 is formed and before the remaining image IM3 is formed, the read unit 60 can read both the first mark portion MA1 and the second mark portion MA2. Therefore, the printer 2 causes the read unit 60 to read a state of the mark portions (MA1 and MA2) after the second image IM2 is formed and before the remaining image IM3 is formed. When position adjustment such as Bi-d adjustment or paper feeding adjustment is executed, the printer 2 causes the read unit 60 to read a relative positional relationship between the first mark portion MA1 and the second mark portion MA2 as a state of the mark portions (MA1 and MA2). The control unit U1 adjusts a landing position of the liquid droplet 37 onto the medium ME0 based on the relative positional relationship between the mark portions (MA1 and MA2).

As described above, it is not necessary to separately print a test pattern for adjustment of the printer 2. Therefore, a liquid consumption amount, a medium consumption amount, and a printing time for printing the test pattern are reduced.

In FIG. 2, the first mark portion MA1 is illustrated as the mark portion MA0. Since the second mark portion MA2 illustrated in FIGS. 3 to 7 has the same shape as the first mark portion MA1, shapes of both the mark portions (MA1 and MA2) will be described as a shape of the mark portion MA0. The mark portion MA0 illustrated in FIG. 2 is an intersect pattern in which a main scanning line LN1 along the main scanning direction D1 and a sub scanning line LN2 along the sub scanning direction D2 intersect each other in patterns of the liquid droplets 37 landed on the medium ME0. The intersect pattern may be a cross pattern in which the main scanning line LN1 and the sub scanning line LN2 are orthogonal to each other as illustrated in FIG. 2, an L-shaped pattern in which an end of the main scanning line LN1 and an end of the sub scanning line LN2 are coupled to each other, a T-shaped pattern in which an end of the sub scanning line LN2 is coupled to an intermediate portion of the main scanning line LN1, a pattern in which an end of the main scanning line LN1 is coupled to an intermediate portion of the sub scanning line LN2, or the like. The main scanning line LN1 and the sub scanning line LN2 may intersect each other without being orthogonal to each other. Since the mark portion MA0 has the intersect pattern, both the Bi-d adjustment and the paper feeding adjustment can be executed.

In the second image IM2 illustrated in FIG. 2, the dot 38 is not present at a landing position PO1 adjacent to the intersect pattern (LN1, LN2). The adjacent landing position PO1 may correspond to at least one dot.

Next, an example of bidirectional multi-pass printing will be described with reference to FIG. 3. In FIG. 3, the forward direction D11 of the main scanning SC1 is a right direction, and the backward direction D12 of the main scanning SC1 is a left direction. The feeding direction D3 which is a direction in which the medium ME0 moves during the sub scanning is a downward direction, and the sub scanning direction D2 which is a relative movement direction of the recording head 30 with reference to the medium ME0 is an upward direction. Band regions B1 to B4 which are units at which recording of the print image IM4 is completed correspond to 1/3 of a length of the nozzle row 33 in the sub scanning direction D2. In the band regions B2 to B4, the recording of the print image IM4 is completed by the main scanning SC1 of three passes.

At a timing t1, the control unit U1 controls the main scanning SC1 so as to move the recording head 30 in the forward direction D11 while ejecting the liquid droplets 37 from the recording head 30 according to the band regions B1 and B2. Here, the first image IM1 is formed by a first pass in the band region B2. The first pass in the band region B2 is referred to as a first pass PA1. The first image IM1 includes the first mark portion MA1 and a blank BL1 in which the second mark portion MA2 is to be formed later. Although a process is not illustrated, in the band region B1, a second image to be described later may be formed in the first pass with respect to the first image IM1 including the first mark portion MA1 formed in a previous pass.

At a subsequent timing t2, the control unit U1 controls the sub scanning SC2 so as to move the medium ME0 along the sub scanning direction D2 until the recording head 30 is aligned with the band regions B1 to B3.

At a subsequent timing t3, the control unit U1 controls the main scanning SC1 so as to move the recording head 30 in the backward direction D12 while ejecting the liquid droplets 37 from the recording head 30 according to the band regions B1 to B3. Here, for the band region B3, the first image IM1 is formed by a first pass in the band region B3, and for the band region B2, the second image IM2 is formed by a second pass in the band region B2. The first pass in the band region B3 and the second pass in the band region B2 are referred to as the second pass PA2. The band regions B1 to B3 are image recording regions in the second pass PA2. The second image IM2 overlapping the first image IM1 includes the first mark portion MA1 and the second mark portion MA2.

At a subsequent timing t4, the control unit U1 controls the sub scanning SC2 so as to move the medium ME0 along the sub scanning direction D2 until the recording head 30 is aligned with the band regions B2 to B4. For the band region B2, the control unit U1 acquires a state of the mark portion MA0 from the read unit 60 after the second image IM2 is formed and before the remaining image IM3 is formed.

At a subsequent timing t5, the control unit U1 controls the main scanning SC1 so as to move the recording head 30 in the forward direction D11 while ejecting the liquid droplets 37 from the recording head 30 according to the band regions B2 to B4. Here, for the band region B4, the first image IM1 is formed by a first pass in the band region B4, for the band region B3, the second image IM2 is formed by a second pass in the band region B3, and for the band region B2, the print image IM4 is formed by a third pass in the band region B2.

As described above, the control unit U1 controls the bidirectional multi-pass printing of forming the print image IM4 on the medium ME0 while repeating the main scanning SC1 and the sub scanning SC2.

As described above, at the timings t1 to t4, the band region B2 is the overlapping region OL1 (see FIGS. 4 to 7) in which image recording regions overlap in the three passes (PA1 to PA3). In the example illustrated in FIG. 3, the control unit U1 executes control of forming the first mark portion MA1 in the overlapping region OL1 in one preceding pass, and executes control of forming the second mark portion MA2 in the overlapping region OL1 in one following pass. Since each of the mark portions (MA1 and MA2) is formed by one pass, an error occurring in the mark portion MA0 is reduced as compared with a case where the mark portions (MA1 and MA2) are formed in two or more passes.

First, an example in which the input image IM0 in which the dots 38 are formed at a recording rate of 100% is decomposed for each pass to form the print image IM4 will be described with reference to FIGS. 4 and 5. In the schematic example illustrated in FIG. 4, the input image IM0 corresponds to the overlapping region OL1, and the printer 2 forms the print image IM4 in the overlapping region OL1 by three passes (PA1 to PA3).

The control unit U1 first decomposes the input image IM0 into the first image IM1, the second image IM2, and the remaining image IM3. Here, the control unit U1 generates the first image IM1 so as to include the first mark portion MA1 based on the input image IM0. The dots 38 of the first mark portion MA1 are derived from the input image IM0. The first image IM1 illustrated in FIG. 5 includes the main scanning line LN1 in which a plurality of the dots 38 are continuous in the main scanning direction D1, and the sub scanning line LN2 in which a plurality of the dots 38 are continuous in the sub scanning direction D2. The dot 38 is not arranged at the landing position PO1 adjacent to the first mark portion MA1 in the first image IM1. In the first image IM1, the second mark portion MA2 and the landing position PO1 adjacent to the second mark portion MA2 serve as the blank BL1 in which the dot 38 is not arranged.

The control unit U1 generates the second image IM2 so as to include the second mark portion MA2 while keeping the first mark portion MA1 based on a virtual image obtained by removing the arrangement of the dots 38 in the first image IM1 from the arrangement of the dots 38 in the input image IM0. A state of keeping a mark portion refers to a state where the mark portion can be identified. For example, in an image obtained by overlapping the second image IM2 with the first image IM1, when the first mark portion MA1 included in the first image IM1 can be identified, it can be said that the second image IM2 can be generated while keeping the first mark portion MA1. Of course, the dots 38 of the second mark portion MA2 are derived from the input image IM0.

The second image IM2 illustrated in FIG. 5 includes the main scanning line LN1 in which a plurality of the dots 38 are continuous in the main scanning direction D1, and the sub scanning line LN2 in which a plurality of the dots 38 are continuous in the sub scanning direction D2. The dot 38 is not arranged at the landing position PO1 adjacent to the second mark portion MA2 in the second image IM2. In the second image IM2, the first mark portion MA1 and the landing position PO1 adjacent to the first mark portion MA1 serve as a blank BL2 in which the dot 38 is not arranged. Therefore, an image during printing in which the second image IM2 overlaps the first image IM1 includes the first mark portion MA1 and the second mark portion MA2, and the image during printing is read by the read unit 60.

Further, the control unit U1 generates the remaining image IM3 by excluding the arrangement of the dots 38 in the second image IM2 from the arrangement of the dots 38 in the virtual image described above. Of course, a generation order of the images (IM1 to IM3) can be changed, and may be, for example, an order of the second image IM2, the first image IM1, and the remaining image IM3, or an order of the first image IM1, the remaining image IM3, and the second image IM2.

After the input image IM0 is decomposed, the control unit U1 executes control of forming the first image IM1 on the medium ME0 in the first pass PA1, executes control of forming the second image IM2 on the medium ME0 in the second pass PA2, and executes control of forming the remaining image IM3 on the medium ME0 in the third pass PA3. Accordingly, a peripheral region including the landing position PO1 adjacent to the mark portions (MA1 and MA2) is filled with the remaining image IM3, and the print image IM4 is completed on the medium ME0. It can be said that trace of the mark portion MA0 does not remain in the print image IM4. The control unit U1 can execute processing based on a state of the mark portion MA0 by acquiring the state of the mark portion MA0 from the read unit 60 before the remaining image IM3 is formed.

The recording rate of the dots 38 of the print image IM4 may be smaller than 100%. FIGS. 6 and 7 illustrate, for example, a state where the input image IM0 in which the dots 38 are formed at a recording rate of 50% is decomposed for each pass to form the print image IM4. In this case, the control unit U1 also first decomposes the input image IM0 into the first image IM1, the second image IM2, and the remaining image IM3. As a result, the arrangement of the dots 38 of the mark portions (MA1 and MA2) is discrete. The first image IM1 and the second image IM2 illustrated in FIG. 7 includes the main scanning line LN1 in which a plurality of the dots 38 are discretely arranged in the main scanning direction D1, and the sub scanning line LN2 in which a plurality of the dots 38 are discretely arranged in the sub scanning direction D2. Here, the control unit U1 does not arrange the dot 38 at the landing position PO1 adjacent to the first mark portion MA1 in the first image IM1, and does not arrange the dot 38 at the landing position PO1 adjacent to the second mark portion MA2 in the second image IM2. The first image IM1 has the blank BL1, and the second image IM2 has the blank BL2. Of course, the control unit U1 generates the remaining image IM3 by excluding arrangements of the dots 38 in the first image IM1 and the second image IM2 from the arrangement of the dots 38 in the input image IM0.

### (3) Comparative Example of Reading Result Including Dots

The printer 2 includes a vibration source such as the drive unit 50, and vibration from the vibration source is transmitted to the medium ME0. For example, when the carriage drive unit 51 moves the carriage 52 or the roller drive unit 55 feeds the medium ME0, vibration is generated in the printer 2 and the vibration is transmitted to the medium ME0. For example, when the read unit 60 is outside the printer 2, since the medium ME0 vibrates with reference to the read unit 60, a reading range AR9 of the read unit 60 with respect to a surface F1 of the medium ME0 varies as illustrated in FIG. 14. When the read unit 60 is inside the printer 2, the reading range AR9 with respect to the surface F1 of the medium ME0 may vary due to a difference between a path of vibration transmitted from a vibration source to the medium ME0 and a path of vibration transmitted from the vibration source to the read unit 60. In any case, since the vibration of the medium ME0 and the vibration of the read unit 60 are different from each other, relative vibration occurs between the medium ME0 and the read unit 60.

FIG. 14 schematically illustrates reading results RS91 to RS93 including the mark portion MA0 in the comparative example.

As described above, when the relative vibration occurs between the medium ME0 and the read unit 60, the reading range AR9 with respect to the medium ME0 varies. As indicated by a rectangle of a solid line in FIG. 14, when the mark portion MA0 is near the center of the reading range AR9, the reading result RS92 in which the mark portion MA0 is near the center is obtained by the read unit 60. Here, an upper left corner of each of the reading results RS91 to RS93 is set as an origin (0, 0), and a center position of the mark portion MA0 is set as coordinates (x, y). As indicated by a rectangle of a two-dot chain line in FIG. 14, when the reading range AR9 is deviated to the upper left with reference to the mark portion MA0, the mark portion MA0 included in the reading result RS91 is deviated to the lower right. Therefore, center coordinates (x, y) of the mark portion MA0 move away from the origin (0, 0). As indicated by a rectangle of a one-dot chain line in FIG. 14, when the reading range AR9 is deviated to the lower right with reference to the mark portion MA0, the mark portion MA0 included in the reading result RS93 is deviated to the upper left. Therefore, center coordinates (x, y) of the mark portion MA0 move close to the origin (0, 0). In any case, a large error occurs in positions of the mark portion MA0 obtained from the reading results RS91 to RS93 due to the relative vibration between the medium ME0 and the read unit 60.

When the printer is adjusted by printing a test pattern and reading the test pattern, the test pattern can be read by, for example, placing the test pattern on a flatbed scanner. However, when the mark portion MA0 is formed on the medium ME0 in real time as illustrated in FIG. 3, it is necessary to read a position of a feature point with high accuracy during a printing operation. Since the feature point is embedded in the first image IM1 and the second image IM2 and filled with the remaining image IM3, the feature point cannot be enlarged. Since the feature point to be read is small, an influence of the movement of the carriage 52 or the conveyance of the medium ME0 during printing tends to be larger than that in a case where a test pattern is used.

In the present specific example, in order to acquire a landing error between passes, the read unit 60 reads the first mark portion MA1 formed in the preceding pass and the second mark portion MA2 formed in the following pass together. The control unit U1 adjusts a landing position of the liquid droplet 37 onto the medium ME0 based on the relative positional relationship between the first mark portion MA1 and the second mark portion MA2. Even when relative vibration occurs between the medium ME0 and the read unit 60, it is possible to accurately adjust the landing position of the liquid onto the medium.

FIG. 8 schematically illustrates the reading result RS0 including the first mark portion MA1 and the second mark portion MA2.

The read unit 60 reads the second mark portion MA2 together with the first mark portion MA1 in the reading range AR1. For example, a relative positional relationship between the first mark portion MA1 and the second mark portion MA2 can be acquired as the coordinates (x, y) by setting the center of the first mark portion MA1 included in the reading result RS0 as the origin (0, 0) and setting a center position of the second mark portion MA2 as the coordinates (x, y).

When relative vibration occurs between the medium ME0 and the read unit 60, the reading range AR1 with respect to the medium ME0 varies. As indicated by a rectangle of a solid line in FIG. 8, when the second mark portion MA2 is near the center of the reading range AR1, the reading result RS2 in which the second mark portion MA2 is near the center is obtained by the read unit 60. As indicated by a rectangle of a two-dot chain line in FIG. 8, when the reading range AR1 is deviated to the upper left with reference to the second mark portion MA2, the second mark portion MA2 included in the reading result RS1 is deviated to the lower right. Here, since the first mark portion MA1 is read by the read unit 60 in addition to the second mark portion MA2, the first mark portion MA1 included in the reading result RS1 is also deviated to the lower right. As a result, the center coordinates (x, y) of the second mark portion MA2 with reference to the origin (0, 0) are substantially matched between the reading result RS1 and the reading result RS2. As indicated by a rectangle of a one-dot chain line in FIG. 8, when the reading range AR1 is deviated to the lower right with reference to the certain second mark portion MA2, the second mark portion MA2 included in the reading result RS3 is deviated to the upper left. Here, since the first mark portion MA1 is read by the read unit 60 in addition to the second mark portion MA2, the first mark portion MA1 included in the reading result RS3 is also deviated to the upper left. As a result, the coordinates (x, y) of the second mark portion MA2 with reference to the origin (0, 0) are substantially matched between the reading result RS3 and the reading result RS2.

The controller 10 may execute control of forming the mark portions (MA1 and MA2) on the medium ME0 with the liquid 36 ejected from one specific nozzle row included in the plurality of nozzle rows 33. The specific nozzle row may be any one of the nozzle rows (33C, 33M, 33Y, and 33K). For example, it is assumed that the K nozzle row 33K corresponds to the specific nozzle row. The controller 10 may control the recording head 30 and the drive unit 50 so as to form the first mark portion MA1 on the medium ME0 with the liquid 36 of K ejected from the K nozzle row 33K in the preceding pass, for example, the first pass PA1. The controller 10 may control the recording head 30 and the drive unit 50 so as to form the second mark portion MA2 on the medium ME0 at a position different from the first mark portion MA1 (see FIGS. 3 to 7) with the liquid 36 of K ejected from the K nozzle row 33K in the following pass, for example, the second pass PA2.

An error between the nozzle rows does not occur in the relative positional relationship between both the mark portions (MA1 and MA2) by using the same K nozzle row 33K for forming both the mark portions (MA1 and MA2). However, when the same K nozzle row 33K is used to form both the mark portions (MA1 and MA2), both the mark portions (MA1 and MA2) become the same black. When both the mark portions (MA1 and MA2) are formed at overlapping positions, it is assumed that the first mark portion MA1 and the second mark portion MA2 cannot be distinguished from each other from the reading result RS0. As illustrated in FIGS. 3 to 7, since the first mark portion MA1 and the second mark portion MA2 are formed at different positions on the medium ME0, the first mark portion MA1 and the second mark portion MA2 can be easily read even when both the mark portions (MA1 and MA2) have the same color.

### (4) Adjustment Processing in First Specific Example

FIG. 9 schematically illustrates the adjustment processing of the printer 2. The adjustment processing is performed by, for example, the controller 10 serving as the control unit U1 illustrated in FIG. 1. Here, step S102 corresponds to a pass decomposing step ST1, step S104 corresponds to the first image forming step ST2, step S106 corresponds to the second image forming step ST3, step S108 corresponds to the reading step ST4, step S110 corresponds to the remaining image forming step ST5, and step S112 corresponds to the adjustment step ST6. Hereinafter, the description of "step" may be omitted, and signs of a step may be illustrated in parentheses. Print control processing of S102 to S110 start when the controller 10 receives a print instruction for forming the print image IM4 that is not a test pattern for adjustment. The print instruction may be an instruction caused by a print request from the host device HO1 to the printer 2, an instruction caused by a print start operation on the input unit 26 of the printer 2, or the like. The adjustment in S112 may be executed in response to the execution of the print control processing of S102 to S110, may be executed every predetermined period such as every month independently of the print control processing, or may be executed when the controller 10 receives an adjustment instruction. The adjustment instruction may be an instruction caused by an adjustment request from the host device HO1 to the printer 2, an instruction caused by an adjustment start operation on the input unit 26 of the printer 2, or the like.

Hereinafter, the adjustment processing will be described with reference to FIGS. 1 to 8.

When the adjustment processing is started, the controller 10 decomposes the input image IM0 into the first image IM1, the second image IM2, and the remaining image IM3 (S102). For example, the controller 10 first generates the first image IM1 based on the input image IM0 so as to include the first mark portion MA1 readable by the read unit 60 and include the blank BL1 in which the second mark portion MA2 is to be formed later. The controller 10 may generate the first image IM1 such that the dot 38 is not arranged at the landing positions PO1 adjacent to the mark portions (MA1 and MA2) in the first image IM1. As long as states of the mark portions (MA1 and MA2) can be read by the read unit 60, the dot 38 may be arranged at the adjacent landing position PO1. Next, based on a virtual image obtained by excluding the arrangement of the dots 38 in the first image IM1 from the arrangement of the dots 38 in the input image IM0, the controller 10 generates the second image IM2 so as to include the second mark portion MA2 readable by the read unit 60. The controller 10 may generate the second image IM2 such that the dot 38 is not arranged at the landing position PO1 adjacent to the mark portions (MA1, MA2) in the second image IM2. As long as states of the mark portions (MA1 and MA2) can be read by the read unit 60, the dot 38 may be arranged at the adjacent landing position PO1. Finally, the controller 10 generates the remaining image IM3 by excluding the arrangement of the dots 38 in the second image IM2 from the arrangement of the dots 38 in the virtual image described above. Of course, as described above, the generation order of the images (IM1 to IM3) can be changed.

After the input image IM0 is decomposed, the controller 10 controls the recording head 30 and the drive unit 50 to form the first image IM1 including the first mark portion MA1 in the overlapping region OL1 in the preceding pass, for example, the first pass PA1 (S104). For example, as at the timing t1 illustrated in FIG. 3, the controller 10 moves the recording head 30 in the forward direction D11 while ejecting the liquid droplet 37 from the recording head 30 according to the band region B1 and the band region B2 serving as the overlapping region OL1. When the liquid droplet 37 ejected from the recording head 30 during the main scanning SC1 lands on the medium ME0, the controller 10 controls the sub scanning SC2 such that the liquid droplet 37 is ejected from the recording head 30 to the overlapping region OL1 in a subsequent following pass, for example, in the second pass PA2. For example, the controller 10 controls the sub scanning SC2 so as to move the medium ME0 along the sub scanning direction D2 until the recording head 30 is aligned with the band regions B1 to B3, as at the timing t2 illustrated in FIG. 3.

As described above, the control unit U1 executes control of forming the first image IM1 including the first mark portion MA1 on the medium ME0 in the preceding pass.

After the first image IM1 is formed, the controller 10 controls the recording head 30 and the drive unit 50 to form the second image IM2 including the second mark portion MA2 and the blank BL2 in the overlapping region OL1 in the following pass, for example, the second pass PA2 (S106). For example, as at the timing t3 illustrated in FIG. 3, the controller 10 moves the recording head 30 in the backward direction D12 while ejecting the liquid droplets 37 from the recording head 30 according to the band region B1, the band region B2 serving as the overlapping region OL1, and the band region B3. When the liquid droplet 37 ejected from the recording head 30 during the main scanning SC1 lands on the medium ME0, the controller 10 controls the sub scanning SC2 such that the liquid droplet 37 is ejected from the recording head 30 to the overlapping region OL1 in a subsequent final pass, for example, the third pass PA3. For example, the controller 10 controls the sub scanning SC2 so as to move the medium ME0 along the sub scanning direction D2 until the recording head 30 is aligned with the band regions B2 to B4, as at the timing t4 illustrated in FIG. 3.

As described above, the control unit U1 executes control of forming the second image IM2 including the second mark portion MA2 on the medium ME0 while keeping the first mark portion MA1 readable by the read unit 60 in the following pass.

After the second mark portion MA2 is formed, the read unit 60 reads the first mark portion MA1 and the second mark portion MA2 together when both the first mark portion MA1 and the second mark portion MA2 are readable. Accordingly, both the mark portions (MA1 and MA2) are included in the reading result RS0 of the read unit 60. The controller 10 acquires the reading result RS0 including both the mark portions (MA1 and MA2) from the read unit 60 (S108).

Depending on the input image IM0, the mark portions (MA1 and MA2) may not be detected from the overlapping region OL1. In this case, the controller 10 may acquire the reading result RS0 from the read unit 60 in a subsequent and following passes.

After acquiring the reading result RS0, the controller 10 controls the recording head 30 and the drive unit 50 so as to form the remaining image IM3 in the overlapping region OL1 in a final pass, for example, the third pass PA3 (S110). For example, as at the timing t5 illustrated in FIG. 3, the controller 10 moves the recording head 30 in the forward direction D11 while ejecting the liquid droplet 37 from the recording head 30 according to the band region B2 serving as the overlapping region OL1, and the band regions B3 and B4. Accordingly, a peripheral region including the landing position PO1 adjacent to the mark portions (MA1 and MA2) is filled with the remaining image IM3, and the recording of the print image IM4 is completed in the overlapping region OL1.

As described above, the control unit U1 executes control of forming the remaining image IM3 of the print image IM4 excluding the first image IM1 and the second image IM2 on the medium ME0 in a pass excluding the preceding pass and the following pass among the plurality of passes.

The controller 10 repeatedly controls recording of three passes of the print image IM4 in the overlapping region OL1 while repeating the main scanning SC1 and the sub scanning SC2.

Thereafter, at an adjustment timing, the controller 10 adjusts a landing position of the liquid 36 onto the medium ME0 based on the relative positional relationship between the first mark portion MA1 and the second mark portion MA2 included in the reading result RS0 (S112), and ends the adjustment processing. For example, as illustrated in FIG. 8, the controller 10 acquires the coordinates (x, y) of the second mark portion MA2 with the center of the first mark portion MA1 as the origin (0, 0) in the reading result RS0. As illustrated in FIG. 2, it is assumed that the mark portions (MA1 and MA2) are intersect patterns. In this case, a position of the sub scanning line LN2 of the second mark portion MA2 with reference to the sub scanning line LN2 of the first mark portion MA1 in the main scanning direction D1 corresponds to an x coordinate, and a position of the main scanning line LN1 of the second mark portion MA2 with reference to the main scanning line LN1 of the first mark portion MA1 in the sub scanning direction D2 corresponds to a y coordinate.

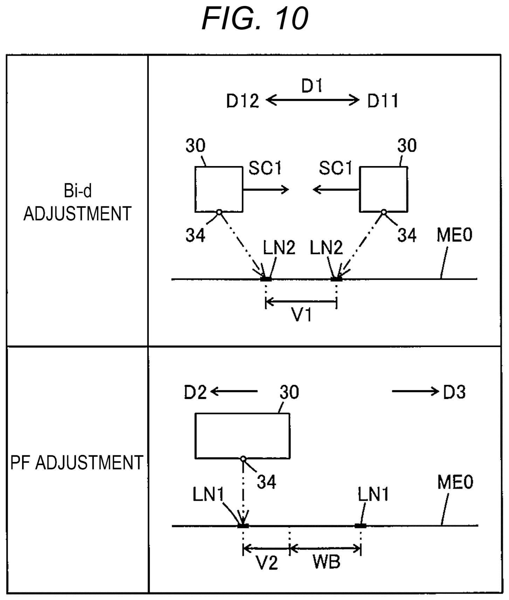

As illustrated in FIG. 10, the adjustment of the landing position includes Bi-d adjustment, paper feeding adjustment (PF adjustment), and the like.

FIG. 10 schematically illustrates the adjustment based on a state of the mark portion MA0.

The Bi-d adjustment refers to setting of an adjustment value V1 for aligning a landing position of the liquid droplet 37 in a forward path and a landing position of the liquid droplet 37 in a backward path in the main scanning direction D1. The forward path refers to the main scanning SC1 in which the recording head 30 moves in the forward direction D11, and the backward path refers to the main scanning SC1 in which the recording head 30 moves in the backward direction D12. For example, it is assumed that the landing position in the backward path to be aligned with the landing position in the forward path in the main scanning direction D1 is deviated in the forward direction D11 from the landing position in the forward path, as illustrated in FIG. 10. In this case, an x coordinate of the sub scanning line LN2 of the second mark portion MA2 formed on the medium ME0 in the backward path is deviated in the forward direction D11 from the x coordinate of the sub scanning line LN2 of the first mark portion MA1 formed on the medium ME0 in the forward path. Since the x coordinate of the sub scanning line LN2 is acquired based on the relative positional relationship between both the mark portions (MA1 and MA2) included in the reading result RS0, the x coordinate is not affected by the relative vibration between the medium ME0 and the read unit 60. The controller 10 can accurately calculate the adjustment value V1 corresponding to a positional deviation of the sub scanning line LN2 based on the x coordinate of the sub scanning line LN2 with a small error. The controller 10 can execute the Bi-d adjustment by storing the adjustment value V1 corresponding to a positional deviation of the sub scanning line LN2 in the storage unit 23 of the printer 2. For example, the controller 10 can delay an ejection timing of the liquid droplet 37 from the recording head 30 in the backward path according to the adjustment value V1 to align the landing position of the liquid droplet 37 in the forward path with that in the backward path in the main scanning direction D1. Of course, when the landing position in the backward path to be aligned with the landing position in the forward path in the main scanning direction D1 is deviated in the backward direction D12 from the landing position in the forward path, the landing position of the liquid droplet 37 in the forward path can be aligned with that in the backward path in the main scanning direction D1 by setting the adjustment value V1.

The preferable mark portion MA0 for the Bi-d adjustment may include the sub scanning line LN2 and may not include the main scanning line LN1. However, since the position of the mark portion MA0 in the main scanning direction D1 can be read even when there is no sub scanning line LN2 in the mark portion MA0, the Bi-d adjustment can be executed.

The PF adjustment refers to setting of an adjustment value V2 for adjusting a conveyance amount of the medium ME0 during the sub scanning SC2 in the sub scanning direction D2 without excess or deficiency. When a conveyance amount of the medium ME0 during the sub scanning SC2 is too large, a streak caused by a gap generated between band regions, for example, a light streak is generated, and when a conveyance amount of the medium ME0 during the sub scanning SC2 is too small, a streak caused by overlapping dots 38 between band regions, for example, a dark streak is generated. For example, it is assumed that an interval between landing positions of the liquid droplets 37 between the sub scanning SC2 in the sub scanning direction D2 is larger than a width WB of a design band region, as illustrated in FIG. 10. In this case, an interval between the main scanning line LN1 formed on the medium ME0 in a certain pass and the main scanning line LN1 formed on the medium ME0 in a previous pass is wider than the width WB of a band region. Since the y coordinate of the main scanning line LN1 is acquired based on the relative positional relationship between both the mark portions (MA1 and MA2) included in the reading result RS0, the y coordinate is not affected by the relative vibration between the medium ME0 and the read unit 60. The controller 10 can accurately calculate the adjustment value V2 corresponding to a deviation of an interval between the main scanning lines LN1 with respect to the width WB of a band region based on the y coordinate of the main scanning line LN1 with a small error. The controller 10 can execute the PF adjustment by storing the adjustment value V2 corresponding to a positional deviation of the main scanning line LN1 in the storage unit 23 of the printer 2. The controller 10 can adjust a conveyance amount of the medium ME0 during the sub scanning SC2 in the sub scanning direction D2 without excess or deficiency by reducing the conveyance amount of the medium ME0 during the sub scanning SC2 according to the adjustment value V2. Of course, when an interval between landing positions of the liquid droplets 37 between the sub scanning SC2 in the sub scanning direction D2 is smaller than the width WB of a design band region, the conveyance amount of the medium ME0 during the sub scanning SC2 can be adjusted without excess or deficiency by setting the adjustment value V2.

The preferable mark portion MA0 for the PF adjustment may include the main scanning line LN1 and may not include the sub scanning line LN2. However, since the position of the mark portion MA0 in the sub scanning direction D2 can be read even when there is no main scanning line LN1 in the mark portion MA0, the PF adjustment can be executed.

As described above, a state of the mark portions (MA1 and MA2) included in the second image IM2 overlapping the first image IM1 is read, and the print image IM4 in which the trace of the mark portions (MA1 and MA2) is removed by the remaining image IM3 formed in the following pass is formed. While the print image IM4 that is not a test pattern is formed, processing based on the state of the mark portions (MA1 and MA2), for example, Bi-d adjustment, paper feeding adjustment, and the like, is executed. In this manner, it is not necessary to separately print a test pattern for adjustment of the printer 2. Therefore, in the present specific example, it is possible to reduce a liquid consumption amount, a medium consumption amount, and a printing time for printing the test pattern.

As illustrated in FIGS. 3 to 7, since the first mark portion MA1 is formed on the medium ME0 in the preceding pass and the second mark portion MA2 is formed on the medium ME0 in the following pass, as illustrated in FIG. 8, the relative positional relationship between the mark portions (MA1 and MA2) is not affected by the relative vibration between the medium ME0 and the read unit 60. Since the first mark portion MA1 and the second mark portion MA2 are read together by the read unit 60, it is possible to accurately adjust the landing position of the liquid 36 onto the medium ME0 based on the relative positional relationship between the first mark portion MA1 and the second mark portion MA2 included in the reading result RS0.

### (5) Second Specific Example of Print Apparatus for Forming First Mark Portion and Second Mark Portion

FIG. 11 schematically illustrates the first mark portion MA1 and the second mark portion MA2 in a second specific example. The second mark portion MA2 illustrated in an upper part of FIG. 11 is located on a lower right side of the first mark portion MA1. The second mark portion MA2 illustrated in a lower part of FIG. 11 is located on an upper left side of the first mark portion MA1. In FIG. 11, elements already described are denoted by reference numerals corresponding to the elements. In the second specific example, detailed description of the elements described in the above example will be omitted.

In FIG. 11, the first mark portion MA1 is a cross pattern, and the second mark portion MA2 is a T-shaped pattern. Therefore, it can be said that a shape of the second mark portion MA2 is different from that of the first mark portion MA1. The control unit U1 executes control of forming the second image IM2, which includes the second mark portion MA2 having a shape different from that of the first mark portion MA1, on the medium ME0 in the following pass, for example, the second pass PA2.

For example, an x coordinate increases toward a right side of FIG. 11, and a y coordinate increases toward a lower side of FIG. 11. In this case, both the x coordinate and the y coordinate have positive values in the example illustrated in the upper part of FIG. 11, and both the x coordinate and the y coordinate have negative values in the example illustrated in the lower part of FIG. 11. When the second mark portion MA2 has the same shape as that of the first mark portion MA1, it is difficult to determine whether the second mark portion MA2 is deviated to the lower right or the upper left with reference to the first mark portion MA1, that is, in which direction the second mark portion MA2 is deviated with reference to the first mark portion MA1.

As illustrated in FIG. 11, since the first mark portion MA1 and the second mark portion MA2 have different shapes, the first mark portion MA1 and the second mark portion MA2 can be easily distinguished in the reading result RS0.

One of the first mark portion MA1 and the second mark portion MA2 may be one dot 38. In this case, a position of the second mark portion MA2 can be acquired with reference to the first mark portion MA1 in the reading result RS0. For example, the first mark portion MA1 may be an intersect pattern and the second mark portion MA2 may be one dot 38, and the first mark portion MA1 may be one dot 38 and the second mark portion MA2 may be an intersect pattern.

### (6) Third Specific Example of Print Apparatus for Forming First Mark Portion and Second Mark Portion

FIG. 12 schematically illustrates the recording head 30 and the mark portion MA0 in a third specific example. In FIG. 12, elements already described are denoted by reference numerals corresponding to the elements. In the third specific example, detailed description of elements described in the above example will be omitted.

The nozzle rows (33C, 33M, 33Y, and 33K) illustrated in FIG. 12 are examples of the first nozzle row 33A capable of ejecting the visible first liquid 41 as the liquid 36 to the medium ME0. It can be said that the first liquid 41 is colored ink. The first liquid 41 is ejected as a first liquid droplet 41p from the nozzle 34 of the first nozzle row 33A, and when the first liquid droplet 41p lands on the medium ME0, a visible first dot 41t is formed on the medium ME0. The recording head 30 illustrated in FIG. 12 further includes, as the nozzle row 33, the second nozzle row 33P capable of ejecting the invisible second liquid 42 as the liquid 36 to the medium ME0. The second liquid 42 is ejected as a second liquid droplet 42p from the nozzle 34 of the second nozzle row 33P, and when the second liquid droplet 42p lands on the medium ME0, an invisible second dot 42t is formed on the medium ME0. The invisible second liquid 42 refers to a liquid for forming, on the medium ME0, the second dot 42t invisible to the human eye under a normal environment, and it can be said that the invisible second liquid 42 is invisible ink. The invisible second liquid 42 may be transparent ink or the like containing a fluorescent substance.

The read unit 60 illustrated in FIG. 12 includes an ultraviolet irradiation unit 65 for enabling reading of the invisible second dot 42t. The ultraviolet irradiation unit 65 irradiates the medium ME0 with ultraviolet rays (UV), for example, UV-A waves for causing the fluorescent substance included in the invisible second dots 42t to emit light. When the second dot 42t emits fluorescence due to the ultraviolet irradiation, the read unit 60 can read states of the visible first liquid 41 and the invisible second liquid 42 landed on the medium ME0.

In the third specific example, the controller 10 executes control of forming the first mark portion MA1 and the second mark portion MA2 in a margin MG1 of the medium ME0 in which the print image IM4 is not formed, with the invisible second liquid 42 ejected from the second nozzle row 33P. In the preceding pass, for example, in the first pass PA1, the controller 10 controls the recording head 30 and the drive unit 50 so as to form the first image IM1 on the medium ME0 and form the invisible first mark portion MA1 in the margin MG1. In the following pass, for example, in the second pass PA2, the controller 10 controls the recording head 30 and the drive unit 50 so as to form the second image IM2 on the medium ME0 and form the invisible second mark portion MA2 in the margin MG1 while keeping the first mark portion MA1 readable by the read unit 60. The read unit 60 reads the first mark portion MA1 and the second mark portion MA2 together in a state where the ultraviolet irradiation unit 65 irradiates the medium ME0 with ultraviolet rays. In the remaining pass, for example, in the third pass PA3, the controller 10 controls the recording head 30 and the drive unit 50 so as to form the remaining image IM3 on the medium ME0.

By forming the mark portions (MA1 and MA2) on the medium ME0 with the invisible liquid 36, the mark portions (MA1 and MA2) do not affect the print image IM4, and processing of dividing the recording of the print image IM4 into a plurality of passes can be easily executed. Since the invisible mark portions (MA1 and MA2) are formed in the margin MG1, the invisible mark portion MA0 does not overlap the print image IM4, and the mark portions (MA1 and MA2) can be easily read.

When the first mark portion MA1 is formed on the medium ME0 with the invisible second liquid 42, the second mark portion MA2 may be formed with the visible first liquid 41. By reading both the mark portions (MA1 and MA2) together by the read unit 60, a landing position can be adjusted based on a relative positional relationship between the mark portions (MA1 and MA2).

When the second mark portion MA2 is formed on the medium ME0 with the invisible second liquid 42, the first mark portion MA1 may be formed with the visible first liquid 41. By reading both the mark portions (MA1 and MA2) together by the read unit 60, a landing position can be adjusted based on a relative positional relationship between the mark portions (MA1 and MA2).

Further, the first image IM1 may include the invisible first mark portion MA1, and the second image IM2 may include the invisible second mark portion MA2. For example, the first image IM1 may include the invisible first marked portion MA1 and the blank BL1 (see FIGS. 3 to 7), and the second image IM2 may include the invisible second marked portion MA2 and the blank BL2 (see FIG. 5,7). Accordingly, the read unit 60 can read both the mark portions (MA1 and MA2) together.

### (7) Fourth Specific Example of Print Apparatus for Forming First Mark Portion and Second Mark Portion

The plurality of passes for completing the recording of the print image IM4 may be two passes. In particular, in a case where the second mark portion MA2 is formed on the medium ME0 with the invisible second liquid 42, even when the second mark portion MA2 is formed on the medium ME0 in the final pass, the landing position can be adjusted without affecting the print image IM4.

FIG. 13 schematically illustrates adjustment processing of the printer 2 in the fourth specific example. In FIG. 13, elements already described are denoted by reference numerals corresponding to the elements. In the fourth specific example, detailed description of elements described in the above example will be omitted.

In FIG. 13, S202 corresponds to the pass decomposing step ST1, S204 corresponds to the first image forming step ST2, S206 corresponds to the second image forming step ST3, S208 to S210 correspond to the reading step ST4, and S212 corresponds to the adjustment step ST6. The invisible second mark portion MA2 is formed in the margin MG1.

When the adjustment processing is started, the controller 10 decomposes the input image IM0 into the first image IM1 and the second image IM2 (S202). When the invisible first mark portion MA1 is formed in the margin MG1, the controller 10 may generate the first image IM1 and the second image IM2 by executing known pass decomposing processing of decomposing the input image IM0 into two passes. When the first mark portion MA1 is included in the first image IM1, the controller 10 may generate the first image IM1 including the first mark portion MA1 based on the input image IM0, and generate the second image IM2 by removing the arrangement of the dots 38 in the first image IM1 from the arrangement of the dots 38 in the input image IM0.

After the input image IM0 is decomposed, the controller 10 controls the recording head 30 and the drive unit 50 to form the first image IM1 including the first mark portion MA1 in the overlapping region OL1 in the first pass PA1 serving as the preceding pass (S204).

After forming the first image IM1, the controller 10 controls the recording head 30 and the drive unit 50 to form the second image IM2 on the medium ME0 and form the invisible second mark portion MA2 in the margin MG1 while keeping the first mark portion MA1 readable by the read unit 60 in the second pass PA2 serving as the following pass (S206).

After forming the second mark portion MA2, the controller 10 causes the ultraviolet irradiation unit 65 to irradiate the margin MG1 with ultraviolet rays (S208). Accordingly, both the first mark portion MA1 and the second mark portion MA2 can be read, and the read unit 60 reads the first mark portion MA1 and the second mark portion MA2 together. The controller 10 acquires the reading result RS0 including both the mark portions (MA1 and MA2) from the read unit 60 (S210).

The controller 10 repeatedly controls recording of two passes of the print image IM4 in the overlapping region OL1 while repeating the main scanning SC1 and the sub scanning SC2.

Thereafter, at an adjustment timing, the controller 10 adjusts a landing position of the liquid 36 onto the medium ME0 based on the relative positional relationship between the first mark portion MA1 and the second mark portion MA2 included in the reading result RS0 (S212), and ends the adjustment processing.

As described above, even when the recording of the print image IM4 is completed in two passes, the landing position can be accurately adjusted based on the relative positional relationship between the mark portions (MA1 and MA2).

### (8) Modifications

Various modifications of the present disclosure are conceivable.

For example, a combination of colors of the liquid 36 is not limited to C, M, Y, and K, and may include orange, green, and the like in addition to C, M, Y, and K. Also, some of the colors C, M, Y, and K of the color combination of the liquid 36 may be omitted.

A movement direction of the recording head 30 in the second pass PA2 and the third pass PA3 may be the same as a movement direction of the recording head 30 in the first pass PA1. The movement direction of the recording head 30 in these passes (PA1 to PA3) may be the forward direction D11 or the backward direction D12.

Even in partial overlap printing in which the recording of the print image IM4 in the band regions B1 to B4 other than the overlapping region OL1 is executed in one pass, the adjustment of the landing position can be executed by forming the mark portion MA0 in the overlapping region OL1.

The recording of the print image IM4 in the overlapping region OL1 may be executed in four or more passes. For example, even when the preceding pass is the first pass, the following pass is the second pass, and the remaining passes are a plurality of passes including the third subsequent passes, the read unit 60 can adjust the landing position by reading both the mark portions (MA1 and MA2) between the second pass and the third pass. Of course, the preceding pass may be the second pass, and the following pass may be the third pass. There may be one or more passes between the preceding pass and the following pass. For example, the preceding pass may be the first pass, the following pass may be the third pass, and the remaining passes may be the second pass and the fourth pass. In this case, the read unit 60 can adjust the landing position by reading both the mark portions (MA1 and MA2) between the third pass and the fourth pass.

Although the mark portion is formed by ejecting the invisible second liquid 42 to the margin MG1 in the above-described specific example, the mark portion may be formed by the colored first liquid 41.

When the mark portion is formed in the margin MG1, since the mark portion cannot be filled with the remaining image, the mark portion is visually recognized in a print result, but even if something is formed in the margin MG1, quality of a print image is less affected, and thus the mark portion formed in the margin MG1 may be colored according to the preference of a user or how a print result is used. Even in this case, since the adjustment is executed by forming the mark portion in the same pass as the print image, it is possible to improve the throughput as compared with a case where the adjustment is executed by printing only a test pattern. In addition, since it is not necessary to form dots around the mark portion, reading accuracy of the mark portion can be increased. Since it is not necessary to perform recording so as to fill the mark portion later, it is easy to perform printing with a low number of passes.

A subject that executes the processing described above is not limited to a CPU, and may be an electronic component other than a CPU, such as an ASIC. Of course, a plurality of CPUs may cooperate with one another to execute the processing described above, or the CPU and another electronic component (for example, ASIC) may cooperate with each other to execute the processing described above.

A part of the processing described above may be executed by the host device HO1. In this case, a combination of the controller 10, the drive unit 50, and the host device HO1 is an example of the control unit U1, and a combination of the printer 2 and the host device HO1 is an example of the print apparatus 1.

### (9) Conclusion

As described above, according to the present disclosure, it is possible to provide a configuration or the like capable of accurately adjusting a landing position of a liquid onto a medium even when relative vibration occurs between the medium and the read unit according to various aspects. Of course, basic functions and effects described above can also be achieved by configurations having only configuration requirements according to the independent claims.

It is possible to implement a configuration in which the elements disclosed in the examples described above are replaced with one another or the combinations thereof are changed, a configuration in which the elements disclosed in known technologies and the examples described above are replaced with one another or the combinations thereof are changed, and the like. The present disclosure also includes such configurations and the like.

## Claims

1. A print apparatus that forms a print image corresponding to an input image on a medium, the print apparatus comprising:
a recording head including a nozzle row configured to eject a liquid onto the medium;
a control unit configured to control main scanning in which a relative positional relationship between the recording head and the medium is changed along a main scanning direction and sub scanning in which a relative positional relationship between the medium and the recording head is changed along a sub scanning direction intersecting the main scanning direction, control ejection of the liquid from the recording head, and complete recording of the print image by the main scanning of a plurality of passes; and
a read unit configured to read a state of the liquid landed on the medium, wherein
the plurality of passes includes a preceding pass, and a following pass after the preceding pass,
the control unit is configured to
execute control of forming a first image, which is a part of the print image and includes a first mark portion readable by the read unit, on the medium in the preceding pass, and
execute control of forming a second image, which is a part of the print image and includes a second mark portion readable by the read unit, on the medium to overlap the first image formed on the medium while keeping the first mark portion readable by the read unit in the following pass,
the read unit reads the first mark portion and the second mark portion together when both the first mark portion and the second mark portion are readable, and
the control unit adjusts a landing position of the liquid on the medium based on a relative positional relationship between the first mark portion and the second mark portion included in a reading result of the read unit.

2. The print apparatus according to claim 1, wherein
the control unit executes control of forming the second image, which includes the second mark portion having a shape different from a shape of the first mark portion, on the medium in the following pass.

3. The print apparatus according to claim 1, wherein
the plurality of passes are three or more passes,
the following pass is a pass before a final pass among the plurality of passes, and
the control unit is configured to
executes control of forming the first image including the first mark portion on the medium in the preceding pass,
execute control of forming the second image including the second mark portion on the medium while keeping the first mark portion readable by the read unit in the following pass, and
execute control of forming a remaining image of the print image excluding the first image and the second image on the medium in a pass excluding the preceding pass and the following pass among the plurality of passes.

4. The print apparatus according to claim 1, wherein
the recording head has, as the nozzle row, a first nozzle row configured to eject a visible first liquid as the liquid to the medium and a second nozzle row configured to eject an invisible second liquid as the liquid to the medium,
the read unit is configured to read states of the first liquid and the second liquid landed on the medium, and
the control unit executes control of forming at least one mark portion of the first mark portion and the second mark portion on the medium with the second liquid ejected from the second nozzle row.

5. The print apparatus according to claim 4, wherein
the control unit executes control of forming the mark portion with the second liquid in a margin of the medium where the print image is not formed.

6. The print apparatus according to claim 1, wherein
the control unit executes at least one of
control of forming the first image such that the first mark portion is included in a region of the medium where the first image is formed in the preceding pass, and
control of forming the second image such that the second mark portion is included in a region of the medium where the second image is formed in the following pass.

7. The print apparatus according to claim 1, wherein
the following pass is a pass subsequent to the preceding pass in the plurality of passes.

8. The print apparatus according to claim 1, wherein
the recording head includes a plurality of the nozzle rows,
the plurality of nozzle rows are arranged in the main scanning direction, and
the control unit is configured to
execute control of forming the first mark portion on the medium with the liquid ejected from one specific nozzle row included in the plurality of nozzle rows in the preceding pass, and
execute control of forming the second mark portion on the medium at a position different from the first mark portion with the liquid ejected from the specific nozzle row in the following pass.

9. An adjustment method of a print apparatus that includes a recording head having a nozzle row configured to eject a liquid onto a medium and that forms a print image corresponding to an input image on the medium,
the print apparatus being configured to perform main scanning in which a relative positional relationship between the recording head and the medium is changed along a main scanning direction and sub scanning in which a relative positional relationship between the medium and the recording head is changed along a sub scanning direction intersecting the main scanning direction, eject the liquid from the recording head during the main scanning, and complete recording of the print image by the main scanning of a plurality of passes,
the plurality of passes including a preceding pass, and a following pass after the preceding pass,
the adjustment method comprising:
a first image forming step of forming a first image, which is a part of the print image and includes a first mark portion readable by a read unit that reads a state of the liquid landed on the medium, on the medium in the preceding pass;
a second image forming step of forming a second image, which is a part of the print image and includes a second mark portion readable by the read unit, on the medium to overlap the first image formed on the medium while keeping the first mark portion readable by the read unit in the following pass;
a reading step of reading the first mark portion and the second mark portion together by the read unit when both the first mark portion and the second mark portion are readable; and
an adjustment step of adjusting a landing position of the liquid on the medium based on a relative positional relationship between the first mark portion and the second mark portion included in a reading result of the read unit.
